# EUROPÄISCHE PATENTANMELDUNG

(11) **EP 3 770 073 A1**
(43) Veröffentlichungstag der Anmeldung: **27.01.2021**
(21) Anmeldenummer: 20187554.9
(22) Anmeldetag: 23.07.2020
(51) Int. Cl.: B65D 1/02, B29C 49/18

(54) **KUNSTSTOFFBEHÄLTNIS MIT ZUGBANDGEOMETRIE AM BODENBEREICH**

(30) Priorität: 24.07.2019 DE 102019119984
(71) Anmelder: Krones AG, 93073 Neutraubling (DE)
(72) Erfinder: Hüttner, Gerald, 93073 Neutraubling (DE); Ringl, Thomas, 93073 Neutraubling (DE); Tissmer, Bastian, 93073 Neutraubling (DE); Wortmann, Jörg, 93073 Neutraubling (DE)
(74) Vertreter: Bittner, Bernhard

(57) **Zusammenfassung**

Kunststoffbehältnis (1), insbesondere für Getränke, mit einem Bodenbereich (2), einem sich in Längsrichtung (L) des Kunststoffbehältnisses (1) an diesen Bodenbereich (2) anschließenden Grundkörper (4) und einem sich in der Längsrichtung (L) an diesen Grundkörper (4) zumindest mittelbar anschließenden Mündungsbereich (6) mit einer Behältnismündung (8), wobei der Bodenbereich (2) wenigstens drei Standfüße (22) aufweist, wobei zwischen zwei insbesondere benachbarten dieser Standfüße (22) wenigstens eine Nut (30) mit einem sich in Umfangsrichtung (U) über einen Umfangswinkel erstreckenden Nutgrund (32) angeordnet ist, wobei das Behältnis einteilig ausgebildet ist. Erfindungsgemäß ist die Wandung des Behältnisses (1) wenigstens abschnittsweise in dem Bereich des Nutgrundes (32) einer Nut (30) nach innen gewölbt ist.

## Beschreibung

Die vorliegende Erfindung bezieht sich auf ein Kunststoffbehältnis und insbesondere auf eine Kunststoffflasche. Insbesondere bezieht sich die vorliegende Erfindung auf ein Kunststoffbehältnis für Getränke. Daneben ist die Erfindung auch auf eine Bodenstruktur für ein derartiges Kunststoffbehältnis gerichtet. Kunststoffbehältnisse werden im Stand der Technik üblicherweise durch Blasformvorgänge und insbesondere Streckblasvorgänge erzeugt. Dazu werden insbesondere erwärmte Kunststoffvorformlinge innerhalb von Blasformen zu Kunststoffbehältnissen bzw. zu Kunststoffflaschen expandiert. Besonders kritisch bei derartig hergestellten Behältnissen sind die Behältnisböden, da diese relativ hohen Belastungen ausgesetzt werden, wie beispielsweise aber nicht ausschließlich dem Gewicht der eigentlichen gefüllten Flasche. Aus dem Stand der Technik ist bekannt, dass diese Behältnisböden bzw. Flaschenböden eine Vielzahl von Standfüßen aufweisen und zwischen diesen Standfüßen Nute verlaufen. Aus dem Stand der Technik ist bekannt, dass zwischen den Standfüßen Zugbänder vorgesehen sind, die etwa Kräfte, die auf den Bodenmittelpunkt - wie beispielsweise einen Anspritzpunkt eines Kunststoffbehältnisses - wirken, über das Zugband auf eine Seitenwandung des Kunststoffbehältnisses leiten.

Ein Ziel bei der Herstellung derartiger Behältnisse ist es, den Materialverbrauch möglichst weiter zu reduzieren bei gleichzeitiger Erzeugung einer möglichst hohen Bodenstabilität, um einerseits dem Eigengewicht einer gefüllten Flasche standzuhalten und andererseits einem etwaigen entstehenden Innendruck insbesondere bei kohlenstoffhaltigen Getränken standhalten zu können.

Aus der DE 10 2013 110 139 A1 ist ein Kunststoffbehältnis mit einem Petaloidboden bekannt, bei welchem zwischen jeweils zwei benachbarten Standfüßen ein Zugband als Nutgrund ausgebildet ist, welches nach außen gewölbt ist und in Umfangsrichtung gesehen eine konstante Krümmung aufweist. Die Bodenwandung des Behältnisses ist damit insbesondere im Bereich eines Nutgrundes und insbesondere in dem Bereich einer geometrischen Mitte des Nutgrundes nach außen gewölbt, vergleichbar mit einem Bereich einer Kugeloberfläche.

Beim Blasprozess eines Kunststoffbehältnisses wird PET-Material mit Blasdruck an die Form geblasen. Interne Labormessungen der Anmelderin haben ergeben, dass etwa bei Behältnissen mit Böden gemäß der obig angegebenen Anmeldung während des Blasprozesses zu viel Material am Zugband des Bodens hängen bleibt und sehr schnell abkühlt, sodass das Material nicht mehr ordentlich verstreckt werden kann. Dabei entstehen unschöne Materialansammlungen am Zugband, welche die Optik und die Bodenperformance in Form von Wandstärke, Bursttest, Thermotest und Stress-Crack-Ergebnis verringern insbesondere bei 0,2 l bis 5 l Volumina.

Der vorliegenden Erfindung liegt die Aufgabe zugrunde, die aus dem Stand der Technik bekannten Nachteile zu überwinden und ein Kunststoffbehältnis, eine Blasformeinrichtung zur Herstellung dieser Kunststoffbehältnisse sowie ein Herstellungsverfahren der Kunststoffbehältnisse bereitzustellen, die eine verbesserte Bodenstabilität ermöglichen, insbesondere ohne dass hierfür ein erhöhter Materialeinsatz erforderlich ist.

Die Aufgabe wird erfindungsgemäß durch die Gegenstände der unabhängigen Ansprüche gelöst. Vorteilhafte Ausführungsformen und Weiterbildungen der Erfindung sind Gegenstand der Unteransprüche.

Ein erfindungsgemäßes Kunststoffbehältnis, insbesondere für Getränke, weist einen Bodenbereich, einen sich in Längsrichtung des Kunststoffbehältnisses an diesen Bodenbereich anschließenden Grundkörper und einen sich in der Längsrichtung an diesen Grundkörper zumindest mittelbar anschließenden Mündungsbereich mit einer Behältnismündung auf. Dabei weist der Bodenbereich wenigstens drei Standfüße auf, wobei zwischen zwei dieser Standfüße, welche insbesondere benachbart sind, wenigstens eine Nut mit einem sich in Umfangsrichtung über einen (vorgegebenen) Umfangswinkel erstreckenden Nutgrund angeordnet ist. Bevorzugt ist das Behältnis einteilig ausgebildet.

Erfindungsgemäß ist die Wandung des Behältnisses (bzw. dessen Bodenbereich) wenigstens abschnittsweise in dem Bereich des Nutgrundes einer Nut nach innen gewölbt, insbesondere bei Betrachtung des (jeweiligen) Abschnitts entlang einer Umfangsrichtung. Bevorzugt ist die Wandung des Behältnisses (bzw. dessen Bodenbereichs) wenigstens abschnittsweise in dem Bereich des Nutgrundes jeder Nut nach innen gewölbt, insbesondere bei Betrachtung des (jeweiligen) Abschnitts entlang einer Umfangsrichtung. Bevorzugt ist die Wandung des Behältnisses wenigstens entlang eines Bereichs eines (bevorzugt jedes) Nutgrundes, wobei sich dieser Bereich (wenigstens abschnittsweise und bevorzugt vollständig) über den (gesamten) vorgegebenen Umfangswinkel (über welchen sich der Nutgrund erstreckt) erstreckt, nach innen gewölbt, insbesondere bei Betrachtung des Bereichs entlang einer Umfangsrichtung und/oder entlang einer auf der Wandung (und/oder Wandungsaußenfläche) gebildeten Linie.

Bei der Längsrichtung handelt es sich insbesondere um eine Richtung entlang einer Mittelachse des Kunststoffbehältnisses. Die Mittelachse des Kunststoffbehältnisses erstreckt sich insbesondere (mittig) durch die (Öffnung der) Behältnismündung (und auch insbesondere mittig durch einen Bodenbereich des Behältnisses, insbesondere durch einen Anspritzpunkt). In stehender Position des Behältnisses erstreckt sich die Mittelachse insbesondere parallel zu einer vertikalen Richtung.

Unter einer Umfangsrichtung ist bevorzugt eine Drehrichtung um die (als Drehachse gewählte) Mittelachse (bzw. Längsrichtung) des Behältnisses zu verstehen. Unter einer radialen Richtung (bezogen auf die Längsrichtung) wird im Folgenden eine Richtung bezogen auf die Längsrichtung (bzw. die Mittelachse des Behältnisses) verstanden, welche senkrecht auf die Längsrichtung (bzw. die Mittelachse) steht und welche insbesondere sich von dieser (insbesondere von der Mittelachse) ausgehend (geradlinig und insbesondere in eine Richtung senkrecht zur Mittelachse) entfernt. Unter dem Umfangswinkel wird bevorzugt ein Winkel in Umfangsrichtung um die Mittelachse nach einer Projektion in eine Ebene senkrecht zur Mittelachse verstanden. Insbesondere wird der Umfangswinkel, über welchen sich der Nutgrund erstreckt, gemessen (als Winkel in Umfangsrichtung um die Mittelachse) an der Projektion des Nutgrunds in eine Ebene senkrecht zur Längsachse.

Bevorzugt dient der Grundkörper zur Aufnahme des wesentlichen Füllvolumens (eines Getränks). Der Grundkörper weist eine in einer Umfangsrichtung vollständig umlaufende (Seiten-)Wandung auf. Dabei kann der Grundkörper einen im Wesentlichen kreisförmigen (bevorzugt kreisförmigen Querschnitt (mit vorgegebenen Hauptdurchmesser, Querschnitt bei Schnitt in Ebene senkrecht zur Mittelachse) aufweisen. Möglich ist aber auch, dass der Grundkörper einen im Wesentlichen quadratischen oder rechteckförmigen Querschnitt insbesondere mit abgerundeten Ecken aufweist.

Bevorzugt ist die Wandung des Behältnisses entlang der geometrischen Mitte einer (jeder Nut) und/oder entlang der geometrischen Mitte eines (jedes Nutgrundes) insbesondere in einem Bereich (in Umfangsrichtung gesehen) zwischen zwei Standfüßen nach innen gewölbt. Bevorzugt ist die Wandung des Nutgrundes in dem Bereich (insbesondere in dem gesamten Bereich) zwischen zwei Standfüßen (in Umfangsrichtung gesehen) nach innen gewölbt. Folgt man einer auf der Wandung des Nutgrundes gebildeten Linie, die derart gebildet ist, dass jeder Punkt der Linie denselben (radialen) Abstand von der Mittelachse aufweist, so weist diese Linie insbesondere im Bereich der geometrischen Mitte des Nutgrundes und bevorzugt in jedem Bereich eine (entlang der Umfangsrichtung) aus der Sicht des Behältnisinneren (beispielsweise aus der Sicht der Behältnismündung und/oder aus der Sicht eines Punktes auf der Mittelachse im Inneren des Behältnisses) konkave Krümmung bzw. konkave Wölbung auf.

Bevorzugt ist die Wandung des Behältnisses wenigstens abschnittsweise in dem Bereich des Nutgrundes einer Nut und bevorzugt in dem Bereich des Nutgrundes jeder Nut in einer radialen Richtung nach außen gewölbt. Eine derartige Wölbung der Wandung nach außen in radiale Richtung bietet den Vorteil, dass die Kräfte - ähnlich wie bei einer Kugeloberfläche - an dieser entlang in radiale Richtung nach außen weitergeleitet bzw. übertragen werden. Dadurch ist es möglich, dass der Nutgrund bzw. jeder Nutgrund als Zugband fungiert. Bevorzugt weist zumindest der Bereich eines Nutgrundes, welcher sich in Umfangsrichtung gesehen, zwischen zwei Standfüßen befindet, in radiale Richtung eine Krümmung bzw. Wölbung nach außen auf.

Bevorzugt bildet der Nutgrund wenigstens abschnittsweise und bevorzugt (nahezu) in seiner Gesamtheit eine Sattelfläche aus, welche (insbesondere an jedem Punkt) in eine erste vorgegebene Richtung eine Krümmung bzw. Wölbung nach außen aufweist und in eine zweite vorgegebene Richtung eine Krümmung bzw. Wölbung nach innen aufweist.

Bevorzugt weist eine der Wandungen des Nutgrundes folgende (hypothetische) Linie, welche sich in radiale Richtung erstreckt, eine aus Sicht des Behältnisinneren (etwa aus Sicht der Mittelachse in dem Behältnisinneren) konvexe Krümmung bzw. konvexe Wölbung auf. Bevorzugt liegt eine solche konvexe Krümmung bzw. konvexe Wölbung im Wesentlichen entlang des gesamten Linienabschnitts zwischen dem Anspritzpunkt und/oder zwischen einem Zentralbereich um den Anspritzpunkt und der Begrenzung des Bodenbereichs zum Grundkörper hin vor.

Bevorzugt weist der Übergangsbereich bzw. der Bereich des Übergangs und/oder die Wandung des Übergangs (bzw. diejenige Kurve, an dem der Grundkörper in den Bodenbereich des Behältnisses übergeht) des Grundkörpers in den Bodenbereich des Behältnisses, wenigstens abschnittsweise und insbesondere vollumfänglich, (insbesondere bei einer (ausschließlich) in Umfangsrichtung verlaufenden, gebildeten Linie (auch nachfolgend insbesondere als Umfangslinie bezeichnet) auf dem Behältnis bzw. der Wandung und/oder einer bei einer gebildeten Linie auf dem Behältnis bzw. der Wandung, welche wenigstens eine Erstreckungsrichtung in Umfangsrichtung des Behältnisses aufweist) eine nach außen gekrümmte Wandung auf (von dem Behältnisinneren aus, etwa in radialer Richtung von der Mittelachse des Behältnisses aus in Blickrichtung nach außen gesehen). Bevorzugt weist dieser Übergang(-sbereich) keine (insbesondere sich in Längsrichtung erstreckende) Nut bzw. keinen nach innen gekrümmten Bereich (insbesondere bei Betrachtung einer entlang der Wandung des Übergang(-sbereichs) gebildeten, in Umfangsrichtung verlaufenden Linie) auf.

Bevorzugt weist eine Tangente in einem Punkt einer gebildeten, an der Außenwandung (und/oder Innenwandung) des Behältnisses entlang der Längsrichtung gebildeten Linie, insbesondere an jedem Punkt des Bereichs, an dem der Bodenbereich in den Grundkörper übergeht, ausschließlich eine Richtungskomponente in Längsrichtung auf. Bevorzugt folgt der Übergangsbereich einem Verlauf entsprechend der Mantelfläche eines Zylinders.

Der Mündungsbereich weist bevorzugt ein Außengewinde und/oder einen Tragring auf. Bevorzugt weist der Bodenbereich einen insbesondere auf der Mittelachse liegenden Anspritzpunkt auf und der Bodenbereich weist bevorzugt einen diesen Anspritzpunkt umgebenden, insbesondere rotationssymmetrisch ausgebildeten, Zentralbereich auf. Bevorzugt befindet sich der Anspritzpunkt in Längsrichtung gesehen (bei aufrecht-stehendem Behältnis) oberhalb der Standfüße des Behältnisses.

Bevorzugt bilden die Standfüße bzw. Außenoberflächen dieser (jeweils) einen insbesondere ebenen, insbesondere sich (ausschließlich) in einer Ebene senkrecht zur Längsrichtung erstreckenden, bevorzugt wenigstens abschnittsweise ringsegmentförmigen, sich über einen vorgegebenen Umfangswinkel erstreckenden Standabschnitt des Kunststoffbehältnisses aus.

Bevorzugt weist das Behältnis ein Füllvolumen (eines Getränks) von wenigstens 0,1 I, bevorzugt wenigstens 0,2 I, bevorzugt wenigstens 0,3 I, bevorzugt wenigstens 1 I, bevorzugt wenigstens 1.5 I, bevorzugt wenigstens 2 I, bevorzugt wenigstens 3.5 I und insbesondere wenigstens 5 I auf. Bevorzugt weist das Behältnis ein maximales Füllvolumen von 5 I, bevorzugt von 3.5 I, bevorzugt von 2 I, bevorzugt von 1.5 I, bevorzugt von 1 I auf. Bevorzugt weist das Behältnis ein Füllvolumen in einem Bereich zwischen 2 I und 3.5 I auf.

Bevorzugt ist das Behältnis für karbonisierte Getränke geeignet.

Bevorzugt weist der Bodenbereich mehr als drei, bevorzugt mehr als vier, bevorzugt mehr als fünf und besonders bevorzugt mehr als sieben Standfüße auf. Bevorzugt weist der Bodenbereich weniger als zehn, bevorzugt weniger als acht, bevorzugt weniger als sechs und besonders bevorzugt weniger als vier Standfüße auf. Bevorzugt weist das Behältnis einen Petaloidboden auf.

Unter einer Nut kann dabei ein geometrisches Gebilde verstanden werden, welches sich bezüglich der (diese umgebende) (Außen-)Wandung des Behältnisses, also etwa der (Außen-)Wandung des Bodenbereichs, nach innen (insbesondere etwa in Richtung der Behältnismündung und/oder der Mittelachse) erstreckt, insbesondere bezogen auf ein Normalniveau der Umfangswandung.

Unter Nutgrund kann ein (Teil-)Bereich einer Nut verstanden werden, der sich durch seine (einheitliche bzw. gemeinsame) geometrische Konstruktion, wie etwa einheitlichen Parametern einer Flächenparametrisierung und/oder Wahl einer Fläche (bzw. einer gemeinsamen Vorschrift für die Flächenkonstruktion), von wenigstens einem weiteren Bereich und insbesondere von dem übrigen Bereich der Nut und/oder von einer Fußflankenfläche eines Standfußes unterscheidet.

Unter Nutgrund kann etwa derjenige (insbesondere zusammenhängende) Bereich einer Nut verstanden werden, der im Wesentlichen den sich (am weitesten) nach innen erstreckenden (Minimums-)Bereich bildet (und diesen umgebenden Bereich). Dabei unterscheidet sich der Nutgrund bevorzugt dadurch von dem übrigen Bereich der Nut, dass dieser verglichen mit dem übrigen Bereich der Nut und insbesondere mit einem an dem Nutgrund seitlich benachbart angeordneten Bereich der Nut, welcher zwischen dem Nutgrund und dem Standfuß liegt, entsprechend einer verschiedenen Flächenform konstruiert wurde. Bevorzugt ist obig beschriebener, an dem Nutgrund benachbart angeordneter, und zwischen dem Nutgrund und dem Standfuß liegender Bereich (in seiner Gesamtheit) Teil einer Fußflankenfläche eines Standfußes (und insbesondere entsprechend als eine solche konstruiert).

Bevorzugt erstreckt sich der Nutgrund von dem Anspritzpunkt oder einem diesen umgebenden Zentralbereich in radiale Richtung nach außen hin, im Wesentlichen bis zu (oder nahezu bis zu) dem Grundkörper. Bevorzugt erstreckt sich die Nut und/oder der Nutgrund über mindestens 75 %, bevorzugt mindestens 80 % und besonders bevorzugt mindestens 90 % der Bogenlänge einer von dem Anspritzpunkt und/oder dem Zentralbereich ausgehenden und von dort auf der Bodenwandung in radiale Richtung nach außen bis zum Grundkörper hin gebildeten Linie.

Bevorzugt erstreckt sich die Nut und/oder deren Nutgrund (und insbesondere erstreckt sich zwischen zwei Standfüßen jeweils mindestens eine angeordnete Nut und/oder deren Nutgrund) in radiale Richtung (zumindest mit einer Komponente). Bevorzugt verläuft die Haupterstreckungsrichtung der Nut und/oder des Nutgrundes in einer Projektion der Nut bzw. des Nutgrunds auf eine Ebene senkrecht zur Längsachse im Wesentlichen und insbesondere genau entlang einer radialen Richtung.

Bevorzugt ist zwischen jeweils zwei (seitlich bzw. in Umfangsrichtung) benachbart angeordneten Standfüßen wenigstens eine und bevorzugt genau eine Nut (mit einem sich in Umfangsrichtung über einen (vorgegebenen) Umfangswinkel erstreckenden Nutgrund) angeordnet, wobei bevorzugt die jeweilige Nut eine in radiale Richtung verlaufende Haupterstreckungsrichtung aufweist (wobei insbesondere jeweils mindestens eine Komponente der Haupterstreckungsrichtung in eine radiale Richtung zeigt).

Bevorzugt ist (jeweils) ein Nutgrund im Wesentlichen und bevorzugt genau symmetrisch (bezogen auf die Umfangsrichtung) zwischen zwei (benachbarten) Standfüßen angeordnet. Bevorzugt ist eine (jede) Nut und/oder ein (jeder) Nutgrund (achsen-)symmetrisch bezüglich einer Ebene ausgebildet, die sich in Längsrichtung der Mittelachse bzw. Längsrichtung des Behältnisses sowie in eine (radiale) Richtung entlang der geometrischen Mitte (in Umfangsrichtung gesehen) der Nut und/oder des Nutgrunds erstreckt.

Bevorzugt befindet sich in der geometrischen Mitte einer Nut und insbesondere in der geometrischen Mitte eines Nutgrundes ein Wandungsbereich des Bodenbereichs, der sich bezogen auf Wandungsabschnitte in Umfangsrichtung am weitesten (in radiale Richtung und/oder zur Mittelachse hin) in das Innere des Behältnisses hineinerstreckt. Mit anderen Worten befindet sich bei einer (ausschließlich) entlang der Umfangsrichtung gebildeten, entlang der Bodenwandung (insbesondere entlang der Außenoberfläche des Bodenbereichs) verlaufenden Linie der Linienabschnitt an der geometrischen Mitte eines Nutgrundes am nächsten an der Mittelachse. Bevorzugt weist diese (ausschließlich) entlang der Umfangsrichtung verlaufende Linie im Bereich des Nutgrundes wenigstens abschnittsweise und bevorzugt im gesamten Bereich des Nutgrundes eine Wölbung nach innen auf. Wird ein Schnitt des Bodenbereichs mit einer Ebene, welche senkrecht auf die Mittelachse steht, gebildet, so ist diese im Bereich des Nutgrundes (insbesondere in diesem gesamten Bereich) nach innen gewölbt (zur Mittelachse hin). Bevorzugt befindet sich ein Wendebereich, in dem sich diese Wölbung bzw. Krümmung umkehrt und/oder dessen Orientierung ändert (ausschließlich) außerhalb des Nutgrundes.

Bevorzugt wird die erfindungsgemäße Nach-Innen-Wölbung der Wandung des Behältnisses in einem Bereich des Nutgrundes entlang einer (hypothetischen) Linie in Umfangsrichtung gesehen. Bevorzugt erstreckt sich der Bereich eines Nutgrundes, der nach innen gewölbt ist, wenigstens über den vorgegebenen Umfangswinkel, über den sich der Nutgrund erstreckt.

Unter einer Bodenlinie wird im Nachfolgenden insbesondere eine entlang des Bodenbereichs gebildete geometrische Linie verstanden, welche in einer Projektion entlang der Längsrichtung auf eine Ebene, welche senkrecht auf der Mittelachse steht, in dieser Linie eine Kreislinie um die Mittelachse ausbildet. Bevorzugt erstreckt sich eine derartige Bodenlinie von einem Standfuß und/oder einem Standbereich über einen Nutgrund hinweg zu einem benachbarten Standfuß und/oder Standbereich. Bevorzugt erstreckt sich die Bodenlinie von einem Standfuß und/oder einem Standbereich vollumfänglich zu diesem Standfuß und/oder Standbereich über wenigstens einen Nutgrund und bevorzugt über alle Nutgründe hinweg.

Der Krümmungsverlauf einer Bodenlinie ist an einem Punkt der Bodenlinie insbesondere durch den jeweiligen Krümmungswert der (Außen-)Wandung in einer Richtung entlang der Bodenlinie gegeben.

Bevorzugt weist die Bodenlinie im Bereich eines Standfußes bzw. in den Bereichen der Standfüße keine Krümmung und/oder nur eine geringfügige Krümmung auf. Die Bodenlinie kann in einem Standbereich des Bodenbereichs, welcher sich in Bezug auf einen Standfuß radial innenliegend oder radial außenliegend (aber in Umfangsrichtung gesehen in dem Bereich des Standfußes) angeordnet ist, nach außen gekrümmt sein (insbesondere bei Betrachtung in der radialen Richtung). Bevorzugt weist die Bodenlinie in einem Bereich, welcher sich in Umfangsrichtung gesehen (unmittelbar) an einen Standfuß und/oder einen Standbereich anschließt, einen nach außen gekrümmten (wiederum bei Blickrichtung in radialer Richtung) Linienverlauf auf. Bevorzugt nimmt die Krümmung der Bodenlinie in dem sich (in Umfangsrichtung) an einen Standfuß und/oder Standbereich anschließenden Bereich in Richtung des benachbarten Nutgrundes zunächst zu (bevorzugt stetig und monoton und insbesondere bevorzugt streng monoton) bis sie einen Maximalwert erreicht und im Anschluss daran die Krümmung (insbesondere stetig und bevorzugt monoton und besonders bevorzugt streng monoton) abnimmt, bis sie einen Wendepunkt und/oder einen Wendebereich erreicht, an dem keine Krümmung der Bodenlinie vorliegt bzw. der Krümmungsradius unendlich ist und/oder indem sich die Orientierung der Krümmung ändert.

Im Anschluss an diesen Wendepunkt weist bevorzugt die Bodenlinie (zwischen dem Wendepunkt und/oder Wendebereich und dem Nutgrund) einen nach innen gekrümmten (wiederum in radialer Blickrichtung) Linienverlauf auf. Bevorzugt nimmt die Krümmung dabei in dem Bereich zwischen dem Wendepunkt und/oder Wendebereich und dem Nutgrund (insbesondere stetig und bevorzugt monoton und besonders bevorzugt streng monoton) zu und erreicht besonders bevorzugt in einem an den Nutgrund (in Umfangsrichtung) benachbarten Bereich einen Maximalwert. Besonders bevorzugt liegt zwischen einem Standfuß und/oder Standbereich (in Umfangsrichtung gesehen) um den benachbarten Nutgrund mindestens ein und besonders bevorzugt genau ein Wendepunkt und/oder ein Wendebereich der Krümmung der Bodenlinie vor. Bevorzugt ändert mit anderen Worten die Bodenwandung in dem Bereich der Bodenlinie ihre Gestalt derart, dass die Bodenlinie von einem nach außen gekrümmten Linienverlauf in der Nähe eines Standfußes und/oder Standbereichs in einem nach innen gewölbten bzw. gekrümmten Linienverlauf in der Nähe des Nutgrundes übergeht.

Bevorzugt weist eine Bodenlinie, welche sich über einen Standfuß und/oder einen Standbereich erstreckt, in dem Bereich des Nutgrundes einen nach innen gewölbten Linienverlauf auf. Bevorzugt ist in dem Bodenlinienbereich innerhalb eines Nutgrundes kein Wendepunkt und/oder Wendebereich der Krümmung der Bodenlinie angeordnet. Dies bedeutet umgekehrt, dass die Krümmung einer Bodenlinie in dem Nutgrund stets dieselbe Orientierung beibehält. Bevorzugt liegt in keinem Linienabschnitt der Bodenlinie in einem Bereich eines Nutgrunds ein ungekrümmter Linienverlauf vor. Bevorzugt weist eine (insbesondere bevorzugt jede) Bodenlinie in dem Bereich des Nutgrundes (bevorzugt in dem Bereich jedes Nutgrundes) einen endlichen Krümmungsradius auf.

Bevorzugt weist eine Bodenlinie (besonders bevorzugt jede Bodenlinie, die sich über einen Standfuß und/oder Standbereich erstreckt) in dem Bereich eines (bevorzugt jedes) Nutgrundes einen variablen Krümmungsverlauf auf. Bevorzugt ist der Krümmungsverlauf einer Bodenlinie in dem Bereich eines Nutgrunds nicht konstant. Durch einen derartigen nicht konstanten und variablen Krümmungsverlauf der bzw. einer Bodenlinie im Bereich des Nutgrundes wird vorteilhaft ermöglicht, dass die Form des Zugbandes zur Erzielung einer verbesserten Herstellung des Bodenbereichs des Behältnisses und insbesondere zur Erzielung eines verbesserten Ergebnisses des Blasformprozesses an eine hierfür vorteilhafte Flächenform des Zugbandes in dem Bereich zwischen zwei Standfüßen angepasst werden kann und dennoch gleichzeitig die Funktionalität des Zugbandes, so etwa die Kraftübertragung von dem Anspritzpunkt auf die Seitenwandung des Behältnisses, möglichst erhalten werden kann.

Bevorzugt ist der Verlauf der Krümmung der Bodenlinie (einer Bodenlinie), welcher sich bevorzugt über wenigstens einen Standfuß und/oder einen Standbereich erstreckt, in dem Bereich eines (jedes) Nutgrundes im Wesentlichen konstant. Denkbar ist zwar, dass die Bodenlinie in einem Abschnitt des Nutgrunds Bereiche mit konstanter Krümmung aufweist, bevorzugt ist allerdings, dass die Bodenlinie in dem Bereich eines Nutgrundes keinen Abschnitt mit konstantem Krümmungsverlauf aufweist. Dies bietet den Vorteil, dass der Nutgrund, der als Zugband fungieren soll, noch besser bzw. noch näher an eine Halbkugelflächenform herangeführt bzw. angenähert werden kann (eine Halbkugel weist einen konstanten Krümmungsradius auf, und dennoch möglichst weit bzw. stark an die Form der Fußflankenflächen bzw. der Standfüße und/oder der Standbereiche angepasst werden kann, sodass beim Blasformprozess Material in möglichst optimaler Weise von einem Bereich an den Nutgrund in die Standfüße hineinfließen bzw. bewegt werden kann.

Unter dem Ausdruck eines im Wesentlichen konstanten Krümmungsverlauf wird dabei insbesondere verstanden, dass sich der Krümmungswert (und/oder der Krümmungsbetrag) um nicht mehr als 30 % eines (insbesondere minimalen Krümmungswerts und/oder Krümmungsbetrags), bevorzugt nicht mehr als 20 %, bevorzugt nicht mehr als 15 %, bevorzugt nicht mehr als 10 % und besonders bevorzugt nicht mehr als 5 % ändert.

In einer vorteilhaften Ausführungsform weist wenigstens ein Nutgrund (bevorzugt jeweils ein Nutgrund einer jeden Nut zwischen zwei Standfüßen) einen Umfangswinkel auf, der zwischen 2,5° und 30°, bevorzugt zwischen 5° und 25°, bevorzugt zwischen 8° und 20°, bevorzugt zwischen 17° und 19° und besonders bevorzugt bei 18° liegt.

Bevorzugt erstreckt sich ein (jeder) Nutgrund mindestens über einen vorgegebenen Umfangswinkel, der zwischen 2,5° und 30°, bevorzugt zwischen 5° und 25°, bevorzugt zwischen 8° und 20°, bevorzugt zwischen 17° und 19° und besonders bevorzugt bei 18° liegt. Bevorzugt erstreckt sich der Nutgrund jeweils genau über den vorgegebenen Umfangswinkel. Bevorzugt ist der vorgegebene Umfangswinkel für jeden Nutgrund einer Nut zwischen zwei Standfüßen gleich. Bevorzugt nimmt ein Nutgrund (jeweils ein Nutgrund) zwischen zwei Standfüßen im Wesentlichen genau eine Ausdehnung in Umfangsrichtung gesehen ein, welches einem Winkelsegment über den vorgegebenen Umfangswinkel entspricht. In Umfangsrichtung gesehen erstreckt sich damit insbesondere ein Nutgrund entlang seiner gesamten radialen Ausdehnung hinweg (also der Ausdehnung in radialer Richtung) über den (im Wesentlichen exakt über den) vorgegebenen Umfangswinkel.
Bei einer weiter vorteilhaften Ausführungsform geht der Nutgrund einer (jeder) Nut (zwischen zwei benachbarten Standfüßen) in den übrigen Bereich der Nut (und/oder in einen Standbereich) und/oder in eine Fußflankenfläche (eines Standfußes) in einem Bereich über, dessen Haupterstreckungsrichtung sich (ausschließlich) in radialer Richtung auf der Bodenbereichswandung und insbesondere nicht in Umfangsrichtung erstreckt.

Bevorzugt ist der Übergangsbereich von einem Nutgrund einer (jeder) Nut in den übrigen Bereich der Nut und/oder in eine Fußflankenfläche (eines Standfußes) durch eine auf dem Bodenbereich gebildete Linie gegeben, welche sich entlang dem Bodenbereich (ausschließlich) in radialer Richtung hin und nicht in eine Umfangsrichtung erstreckt.

Bei einer weiter vorteilhaften Ausführungsform ändert sich die Krümmung einer entlang des Bodenbereichs gebildeten Linie, bevorzugt einer Bodenlinie, welche sich ausgehend von einem Standfuß oder einem einen Standfuß umgebenden Standbereich über wenigstens einen Nutgrund hinweg erstreckt, in dem Nutgrund um weniger als 30 %, bevorzugt um weniger als 25 %, bevorzugt um weniger als 20 % und besonders bevorzugt um weniger als 15 %.

Bei einer bevorzugten Ausführungsform ändert sich der Krümmungswert (und/oder Krümmungsbetrag) (insbesondere aus einer Betrachtung in radialer Richtung) eines Bereichs der Nut und/oder eines Abschnitts einer (insbesondere jeder) Bodenlinie, welche sich (wenigstens abschnittsweise) über einen Standfuß und/oder einen Standbereich erstreckt, innerhalb eines Umfangswinkelbereichs (insbesondere also einem vorgegebenem Winkelsegment um die Mittelachse bzw. einem Bereich des Behältnisbodens, der innerhalb eines bestimmten Winkelsegments um die Mittelachse liegt) um weniger als 30 %, bevorzugt um weniger als 25 %, bevorzugt um weniger als 20 %, bevorzugt um weniger als 15 %, bevorzugt um weniger als 10 % und besonders bevorzugt um weniger als 5 %. Dabei erstreckt sich dieser Bereich der Nut bzw. dieser Abschnitt der Bodenlinie (insbesondere jeweils) in Umfangsrichtung über einen (vorgegebenen) Winkel von wenigstens 2,5°, bevorzugt von wenigstens 5° und besonders bevorzugt von wenigstens 10°. Bevorzugt weist dabei dieser Bereich bzw. dieser Abschnitt der Bodenlinie keinen ungekrümmten Verlauf (bei Betrachtung in radialer Richtung) auf. Bevorzugt weist dabei dieser Bereich bzw. dieser Abschnitt der Bodenlinie eine variierende Krümmung (insbesondere bei Betrachtung in radialer Richtung) und insbesondere keine konstante Krümmung auf.

Bevorzugt erstreckt sich ein solcher Bereich in radialer Richtung entlang des Bodenbereichs im Wesentlichen entlang des gesamten Nutgrundes. Bevorzugt erstreckt sich ein solcher Bereich in radialer Richtung mindestens über die Ausdehnung des Standfußes in radialer Richtung. Bevorzugt erstreckt sich ein solcher Bereich in radialer Richtung entlang des Bodenbereichs im Wesentlichen entlang mindestens 50 %, bevorzugt mindestens 60 % und besonders bevorzugt 70 % einer in radialer Richtung auf der Bodenbereichswandung gebildeten Linie ausgehend von dem Anspritzpunkt (oder dem Zentralbereich) bis hin zu dem Übergang zwischen dem Bodenbereich und dem Grundkörper.

Bevorzugt ist der Krümmungsverlauf einer Bodenlinie in jedem Punkt innerhalb des Nutgrundes stetig und bevorzugt differenzierbar, insbesondere an der geometrischen Mitte eines Nutgrundes differenzierbar. Bevorzugt bleibt die Orientierung der Krümmung der Bodenlinie in dem Bereich des Nutgrundes dieselbe.

Bei einer weiter vorteilhaften Ausführungsform sind die Maximalabschnitte eines Nutgrundabschnitts einer Bodenlinie, in welchen die Krümmungswerte des Nutgrundabschnitts der Bodenlinie (lokale) Maximalwerte und/oder globale Maximalwerte (bezogen auf den Nutgrundabschnitt) annehmen, (ausschließlich) an den Randbereichen (in Umfangsrichtung) des Nutgrundes angeordnet.

Bei einer weiter vorteilhaften Ausführungsform ist der Minimalabschnitt eines Nutgrundabschnitts einer Bodenlinie, in dem dessen Krümmungswerte (und/oder Krümmungsbeträge) (lokale) Minimalwerte und/oder globale Minimalwerte (bezogen auf den Nutgrundabschnitt) annehmen, (ausschließlich) in einem Bereich um die geometrische Mitte des Nutgrundes angeordnet. Bevorzugt befindet sich der Bereich mit dem minimalen Krümmungsbetrag im Wesentlichen genau an der Bodenlinienstelle der geometrischen Mitte des Nutgrundes. Bevorzugt liegt genau ein lokales Minimum der Krümmungswerte innerhalb des Abschnitts einer Bodenlinie in dem Nutgrund vor. Bevorzugt fallen die Krümmungswerte eines Krümmungsverlaufs innerhalb eines Nutgrunds von einem Nutgrundrand zu dem zweiten Nutgrundrand zunächst (bevorzugt streng) monoton ab und steigen dann, bevorzugt nach Erreichen eines absoluten Minimums insbesondere (exakt) in der geometrischen Mitte des Nutgrundes, zum zweiten Nutgrundrand wieder (bevorzugt streng) monoton an.

Bei einer weiter vorteilhaften Ausführungsform ist die Wandung des Behältnisses wenigstens abschnittsweise und bevorzugt in einem (insbesondere zusammenhängenden) seitlich benachbarten Bereich einer geometrischen Mitte des Nutgrundes nach innen gewölbt (wiederum in Blickrichtung in radialer Richtung).

Bei einer weiter vorteilhaften Ausführungsform ist die Wandung des Behältnisses wenigstens abschnittsweise entlang einer geometrischen Mitte des Nutgrundes nach innen gewölbt. Bevorzugt ist die Wandung des Behältnisses in jedem (in Umfangsrichtung) zwischen zwei benachbarten Standfüßen an der geometrischen Mitte des Nutgrundes angeordneten Bereich nach innen gewölbt.

Bevorzugt weist das Behältnis mehrere Nutgrunde und/oder Nute derselben Form auf. Insbesondere weisen alle Nute und/oder Nutgrunde zwischen zwei Standfüßen dieselbe Form auf.

Bei einer weiter vorteilhaften Ausführungsform vergrößert sich eine Breite (insbesondere in Umfangsrichtung gemessen) des Nutgrundes in einer radialen Richtung des Behältnisses nach außen und/oder mit zunehmenden radialen Abstand von der Mittelachse.

Bei einer weiter vorteilhaften Ausführungsform geht ein (bevorzugt jeder) zwischen einem Standfuß und einem Nutgrund angeordneter Bereich des Bodenabschnitts tangentenstetig und/oder krümmungsstetig in den Nutgrund über. Mit anderen Worten geht ein (insbesondere jeder) seitlich an dem Nutgrund benachbart angeordneter (in Umfangsrichtung gesehen) Bereich des Bodenabschnitts (insbesondere eine Fußflankenfläche) tangentenstetig und/oder krümmungsstetig in den Nutgrund über. Dabei wird in diesem Absatz die Tangentenstetigkeit bzw. Krümmungsstetigkeit insbesondere bei Betrachtung eines Übergangs in Umfangsrichtung und/oder entlang einer Bodenlinie und/oder bei einer radialen Blickrichtung gesehen. Ein derartiger tangentenstetiger und/oder krümmungsstetiger Übergang bietet den Vorteil, dass während eines Blasprozesses zu verteilendes Kunststoffmaterial bei möglichst geringer, durch die geometrische Form (der korrespondierenden Blasform) bewirkte Reibung, beispielsweise von dem Nutgrund, (entlang der Fußflankenflächen) in einen Standfuß bewegt bzw. verstreckt werden kann.

Bei einer weiter vorteilhaften Ausführungsform weist wenigstens eine in radialer Richtung, auf der Oberfläche verlaufende (bzw. gebildete) Linie, welche (wenigstens abschnittsweise) durch einen Nutgrund verläuft, einen Wendebereich auf, in dem ein Oberflächenbereich des Bodenabschnitts die Orientierung seiner Krümmung ändert und insbesondere von einem nach außen gekrümmten Bereich (insbesondere bei Betrachtung eines Krümmungsverlaufs einer Bodenlinie und/oder eines Krümmungsverlaufs einer in Umfangsrichtung verlaufenden Linie; insbesondere unter Betrachtung aus radialer Richtung) in einen nach innen gekrümmten Bereich überführt wird.

Mit anderen Worten weist der Bodenbereich bevorzugt einen ersten Bereich sowie einen zweiten Bereich auf, die wenigstens abschnittsweise und bevorzugt vollständig voneinander verschieden sind und von welchen der zweite Bereich in Bezug auf die Anordnung des ersten Bereichs näher an dem Bodenmittelpunkt und/oder dem Anspritzpunkt und/oder näher an der Mittelachse des Behältnisses angeordnet ist, wobei der erste Bereich wenigstens abschnittsweise (und bevorzugt in seiner Gesamtheit) zwischen (entsprechend der radialen Richtung entlang der Behältniswandung nach außen folgend) dem zweiten Bereich und dem Grundkörper angeordnet ist. Bevorzugt unterscheiden sich der erste und der zweite Bereich voneinander (insbesondere ganzflächig) durch ihre Wölbung entlang wenigstens einer Richtung und bevorzugt in genau eine Richtung (bevorzugt entlang einer Bodenlinie und/oder einer der Umfangsrichtung folgenden, entlang/ auf der Behältniswandung gebildeten Linie).

Bevorzugt weist der erste Bereich eine Wölbung nach außen auf, wohingegen der zweite Bereich bevorzugt eine Wölbung nach innen aufweist. Bevorzugt sind sowohl der erste Bereich als auch der zweite Bereich an der geometrischen Mitte einer Nut und/oder eines Nutgrunds angeordnet.

Bevorzugt ist zwischen (insbesondere entsprechend der radialen Richtung entlang der Behältniswandung nach außen folgend) dem ersten Bereich und dem zweiten Bereich ein Wendebereich angeordnet, in dem sich die Wölbung umgekehrt und insbesondere die Wölbung des Bereichs an der nach innen in eine Wölbung nach außen übergeht. Insbesondere kann es sich bei dem Wendebereich auch um einen punktförmigen Bereich (Wendepunkt) handeln.

Bei einer weiter vorteilhaften Ausführungsform folgt eine Nutgrundquerschnittskontur bzw. eine Zugbandquerschnittskontur bei einem Querschnitt entlang der Längsrichtung des Behältnisses (durch einen Bodenbereich des Behältnisses) wenigstens abschnittsweise und bevorzugt im Wesentlichen vollständig einem Spline n-ten Grades. Dabei ist der Grad bevorzugt gewählt zwischen Grad 2 und Grad 7.

Bei einer weiter vorteilhaften Ausführungsform folgt eine Nutgrundquerschnittskontur bzw. Zugbandquerschnittskontur entlang der geometrischen Mitte eines (jedes) Nutgrundes bzw. eines (jedes) Zugbandes wenigstens abschnittsweise und bevorzugt im Wesentlichen vollständig (wengistens und bevorzugt genau) einem Spline n-ten Grades. Dabei ist der Grad bevorzugt gewählt zwischen Grad 2 und Grad 7.

Bei einer weiter vorteilhaften Ausführungsform geht ein durch einen Spline beschreibbarer Abschnitt eines und bevorzugt jedes Nutgrundes, welcher insbesondere in einer sich in Längsrichtung und radialer Richtung erstreckenden Ebene verläuft, tangentenstetig und/oder krümmungsstetig in einen sich an den Spline anschließenden, bevorzugt geradlinigen, Abschnitt des Bodenbereichs über. Bevorzugt geht der durch den Spline beschreibbare Abschnitt eines und bevorzugt jedes Nutgrundes, an jedem seiner beiden Endpunkte tangentenstetig und/oder krümmungsstetig in einen sich an den Spline anschließenden, bevorzugt geradlinigen oder gekrümmten, Abschnitt des Bodenbereichs und/oder Grundkörpers über.

Bevorzugt ist eine Basiskontur des Bodenbereichs des Behältnisses in dem Bereich eines (jedes) Nutgrundes bzw. Zugbandes und insbesondere ist eine Querschnittskontur des Bodenbereichs (bei einem Querschnitt entlang der Längsachse des Behältnisses) im Bereich des Nutgrundes und insbesondere entlang der geometrischen Mitte des Nutgrundes bzw. des Zugbands derart gewählt, dass sie bevorzugt zunächst einen Grundkörperanschlussabschnitt, welcher bevorzugt als geradliniger oder gekrümmter Abschnitt ausgebildet ist, aufweist (insbesondere in einem Bereich welcher sich an den Grundkörper anschließt), an welchen sich (wenigstens und bevorzugt genau) ein Spline n-ten Grades (wobei n bevorzugt gewählt ist zwischen (einschließlich) 2 und (einschließlich) 7) anschließt. Bevorzugt schließt sich an den Spline ein Mittelpunktsübergangsabschnitt an, welcher insbesondere von einem geometrischen Mittelpunkt des Behältnisses und/oder einem Anspritzpunkt und/oder einem Zentralabschnitt ausgeht. Bevorzugt nimmt der Grundkörperanschlussabschnitt und/oder der Mittelpunktsübergangsabschnitt dieser Basiskontur (jeweils) weniger als 20%, bevorzugt weniger als 10% und besonders bevorzugt weniger als 5% der Bogenlänge der Basiskontur ein.

Bevorzugt geht der Spline n-ten Grades tangentenstetig und besonders bevorzugt krümmungsstetig in den Grundkörper des Behältnisses und/oder in den Grundkörperanschlussabschnitt über. Bevorzugt ist ein Tangentenwert des Splines an einem Übergangsbereich und/oder Übergangspunkt zwischen dem Spline und dem Grundkörper des Behältnisses und/oder dem Grundkörperanschlussabschnitt ausgewählt aus einem Bereich zwischen 0,1 und 2,5, wobei insbesondere dieser Wert einen Betrag des Tangentenvektors darstellt und bevorzugt als Prozentsatz der Tangentialität angegeben ist.

Bevorzugt geht der Spline n-ten Grades tangentenstetig und besonders bevorzugt krümmungsstetig in den Mittelpunktsübergangsabschnitt und/oder den Zentralabschnitt des Behältnisses und/oder den Anspritzpunkt über. Bevorzugt ist ein Tangentenwert des Splines an einem Übergangsbereich und/oder Übergangspunkt zwischen dem Spline und dem Mittelpunktsübergangsabschnitt und/oder dem Zentralabschnitt des Behältnisses und oder dem Anspritzpunkt ausgewählt aus einem Bereich zwischen 0,1 und 2,5, wobei insbesondere dieser Wert einen Betrag des Tangentenvektors darstellt und bevorzugt als Prozentsatz der Tangentialität angegeben ist.

Bevorzugt weist die Basiskontur wenigstens und bevorzugt genau einen krümmungsstetigen Übergang des Splines in einen sich an den Spline ersten anschließenden Abschnitt auf und bevorzugt weist die Basiskontur wenigstens und bevorzugt genau einen tangentenstetigen Übergang des Splines in einen sich an den Spline zweiten anschließenden Abschnitt auf. Bei dem ersten anschließenden Abschnitt kann es sich beispielsweise um den Mittelpuntksübergangsabschnitt und/oder den Zentralbereich und/oder den Anspritzpunkt, oder es kann sich aber um den Grundkörperanschlussabschnitt oder den Grundkörper handeln. Bei dem zweiten anschließenden Abschnitt kann es sich beispielsweise um den Grundkörperanschlussabschnitt oder den Grundkörper, oder aber es kann sich um den Mittelpunktsübergangsabschnitt und/oder den Zentralbereich und/oder den Anspritzpunkt handeln.

Bevorzugt weist die Basiskontur einen Spline auf bzw. kann durch einen Spline (zumindest abschnittsweise) beschrieben werden, der an wenigstens einen sich daran anschließenden Abschnitt mit einer konischen Übergangssteuerung angebunden ist. Eine derartige konische Übergangssteuerung des Splines wird üblicherweise durch einen Wert Rho charakterisiert bzw. gesteuert bzw. beschrieben, welcher bevorzugt zwischen 0,01 und 0,99 liegt. Insbesondere erzeugt ein kleiner Rho-Wert einen flachen Kegel, während ein großer Rho-Wert einen spitzen Kegel erzeugt.

Bei einer weiter vorteilhaften Ausführungsform folgt der Nutgrund wenigstens abschnittsweise (bevorzugt wenigstens der in Umfangsrichtung gesehen zwischen zwei Standfüßen angeordnete Bereich des Nutgrunds) und insbesondere im Wesentlichen entlang dessen gesamter Ausdehnung in radiale Richtung einem kreiskugelartigen Verlauf. Bevorzugt weist der Bodenbereich zwischen je zwei (benachbarten) Standfüßen einen (im Wesentlichen von einem Zentralbereich und/oder Anspritzpunkt ausgehend zu dem Grundkörper des Behältnisses hin erstreckenden) Bereich auf, der einen kreiskugel(-segment-)artigen Verlauf aufweist. Dies bietet den Vorteil, dass bei einem (weitgehend) an einen kreiskugel(-segment-)förmigen Verlauf angenäherten Oberflächenverlauf der Wandung die vorteilhaften geometrischen Eigenschaften einer kreiskugel(-segment-)förmigen Wandung hinsichtlich der Kräfteübertragung weitgehend beibehalten werden können.

Bevorzugt weicht der Nutgrund wenigstens abschnittsweise und insbesondere in einem (jedem) Bereich zwischen zwei Standfüßen (in Umfangsrichtung gesehen) von einem (im Wesentlichen) exakt halbkugel(-segement-)förmigen Wandungsabschnitt bzw. Verlauf ab. Mit anderen Worten folgt bevorzugt kein Bereich des Nutgrunds einem streng geometrischen halbkugel(-segment-)förmigen Verlauf.

Unter einem halbkugelartigen Verlauf eines Bereichs wird insbesondere verstanden, dass dieser Bereich nicht mehr als 20 %, bevorzugt nicht mehr als 10 %, bevorzugt nicht mehr als 5 % und besonders bevorzugt nicht mehr als 2,5 % eines Kugelradius von einer an den Bereich angenäherten Kugel, (insbesondere in radialer Richtung bezogen auf den Kugelmittelpunkt der angenäherten Kugel) abweicht.

Bevorzugt lässt sich der Nutgrund wenigstens abschnittsweise, bevorzugt ein (insbesondere in seiner gesamten Ausdehnung in Umfangsrichtung) gewählter Abschnitt des Nutgrunds zwischen zwei Standfüßen und besonders bevorzugt in seiner Gesamtheit zwischen zwei (hypothetische) Kreiskugeloberflächen einbeschreiben, deren Kugelradien um weniger als 20 %, bevorzugt weniger als 10 %, bevorzugt weniger als 5 % und besonders bevorzugt weniger als 2,5 % voneinander abweichen.

Bevorzugt weicht eine entlang der geometrischen Mitte zwischen zwei benachbarten Standfüßen und/oder der geometrischen Mitte der Nut und/oder der geometrischen Mitte des Nutgrunds auf der Wandung gebildete Linie von einem daran wenigstens abschnittsweise angenäherten Kreisbogen (an jedem Punkt der gebildeten Linie) um weniger als 20%, bevorzugt weniger als 10 %, bevorzugt weniger als 5 % und besonders bevorzugt weniger als 2,5% des Kreisradius der angenäherten Kreislinie in Hinblick auf einen geometrischen Abstand dieser gebildeten Linie von der angenäherten Kreislinie ab. Bevorzugt nimmt dabei die gebildete Linie mehr als 20 %, bevorzugt mehr als 30 %, bevorzugt mehr als 40 %, bevorzugt mehr als 50 %, bevorzugt mehr als 60 %, bevorzugt mehr als 70 %, bevorzugt mehr als 80 % und besonders bevorzugt mehr als 85 % der Bogenlänge einer auf der Wandung, durch geometrische Mitte zwischen zwei benachbarten Standfüßen und oder durch die geometrische Mitte der Nut und/oder des Nutgrunds verlaufenden, gebildeten Verbindungslinie zwischen einerseits dem Bodenmittelpunkt und/oder dem Anspritzpunkt und andererseits dem Übergang des Bodenbereichs in den Grundkörper ein. Bevorzugt lässt sich diese gebildete Linie (wenigstens abschnittsweise und bevorzugt in einem Bereich mehr als 85% der Bogenlänge) durch einen Spline n-ten Grades beschreiben. Denkbar ist aber auch, dass sich diese gebildete Linie durch eine Kreislinie beschreiben lässt.

Bei einer weiter vorteilhaften Ausführungsform ist der Nutgrund (bzw. das Zugband) keine um die Mittelachse des Behältnisses (insbesondere in seiner Gesamtheit und bevorzugt auch keine wenigstens abschnittsweise) rotationssymmetrische Fläche. Dies unterscheidet die Konstruktion des Nutgrundes von derjenigen eines aus dem Stand der Technik bekannten Nutgrundes, in welchem die Basiskontur Zugband an beiden Enden eines Winkelsegments um eine Mittelachse über einen Zugbandwinkel rotiert wird. Eine Abweichung von einem rotationssymmetrischen Flächenabschnitt bietet den Vorteil, dass hierdurch eine Anpassung an den Kurvenverlauf (insbesondere auch hinsichtlich der Krümmung) bei zugleich weitgehender halbkugelsegmentförmiger Form möglich ist.

Bevorzugt ist der Nutgrund als Freiformfläche ausgebildet, welche an die Flächenkanten einer Fußflankenfläche oder eines Übergangsbereichs, der seitlich an einen Standfuß angeordnet ist, und an den Grundkörper des Behältnisses sowie an einen Zentralbereich um einen Anspritzpunkt oder an den Anspritzpunkt insbesondere tangentenstetig und insbesondere krümmungsstetig angebunden ist. Der Krümmungsverlauf der Freiformfläche des Nutgrundes in eine (jede) vorgegebene Richtung kann durch Polynome n-ten Grades beschrieben werden.

Bevorzugt wird wenigstens ein, bevorzugt werden wenigstens zwei, bevorzugt wenigstens drei für die Freiformfläche des Nutgrundes charakteristische Parameter derart gewählt und/oder bestimmt, etwa approximiert, dass die Freiformfläche an in ihrer geometrischen Form an einen Bereich einer Kugeloberfläche angenähert ist und insbesondere halbkugel(-segment-)artig ausgebildet ist.

Bei einer weiter vorteilhaften Ausführungsform weist der Behältnisboden wenigstens abschnittsweise und bevorzugt ganzflächig eine im Wesentlichen konstante Wandungsstärke auf. Insbesondere ist eine Wandungsstärke in dem Bereich eines Standfußes und dem Bereich eines Nutgrundes im Wesentlichen gleich groß. Damit kann vorteilhaft bei möglichst geringem Materialeinsatz eine möglichst große Stabilität des Behältnisses bzw. Behältnisbodens erreicht werden.

Bevorzugt ist der Behältnisboden achsensymmetrisch in Bezug auf die Mittelachse ausgebildet.

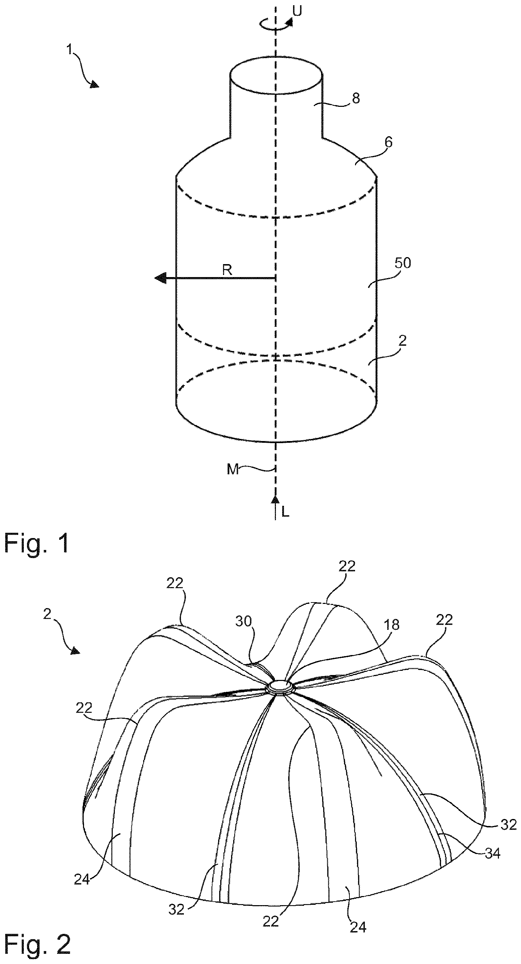

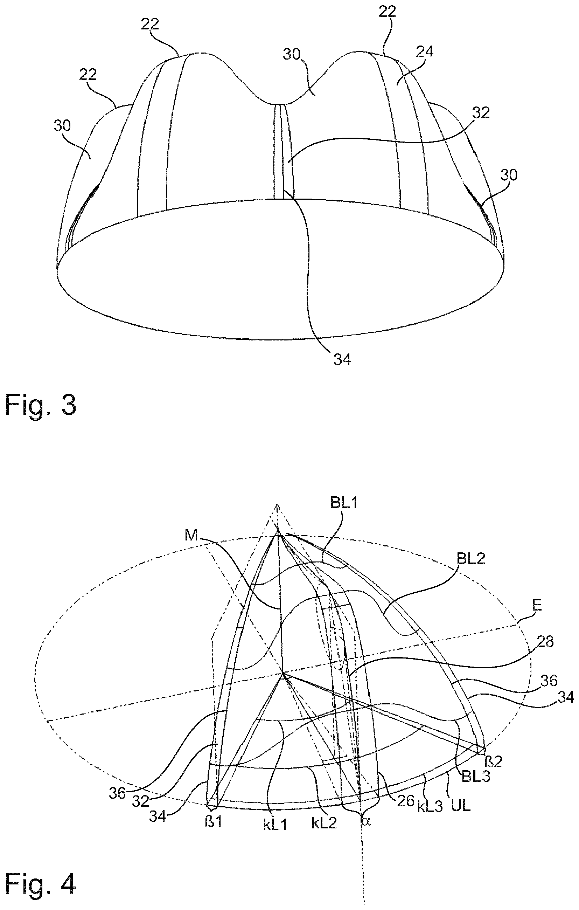

Bevorzugt kann eine Basiskontur des Bodenbereichs des Behältnisses in einem Bereich eines Standfußes beschrieben werden durch eine Basiskontur in diesem Fußbereich, welche bevorzugt zunächst einen geradlinigen Abschnitt aufweist (insbesondere ausgehend von einem geometrischen Mittelpunkt des Behältnisses und/oder einem Anspritzpunkt und/oder einem Zentralabschnitt), an welchen sich ein Spline bzw. gekrümmter Abschnitt anschließt. An diesen gekrümmten Abschnitt schließt sich bevorzugt ein weiterer gekrümmter Abschnitt bzw. Spline an, sowie bevorzugt ein weiterer gekrümmter Abschnitt, mit dem der Bodenbereich in den Grundkörper übergeht. Die Fußfläche, insbesondere der Standfuß und/oder der Standbereich, ist aus dieser Basiskontur durch eine Rotation der Basiskontier um die als Rotationsachse gewählte Mittelachse des Behältnisses erzeugt. Es wird explizit Bezug genommen auf die Patentanmeldung DE 10 2013 110 139 A1 der Anmelderin, in der eine derartig, bevorzugte Geometrie des Fußbereichs des Bodenbereichs (darin Bodenabschnitt) beschrieben ist (und in Fig. 2 und Fig. 3 illustriert ist). Sämtliche in dieser Anmeldung beschriebenen Merkmale bezogen auf den Bereich des Standfußes (und dessen Krümmungsverlauf) sollen hiermit durch Bezugnahme ebenfalls als offenbart angesehen werden.

Bevorzugt handelt es sich bei dem seitlich an dem Nutgrund benachbart angeordneten (in Umfangsrichtung gesehen) Bereich um eine Fußflankenfläche eines Standfußes des Behältnisses. Die Fußflankenfläche ist bevorzugt als Freiformfläche ausgebildet, welche bevorzugt an die Flächenkanten des Standfußes und/oder eines Fußbereichs und insbesondere an die Flächenkanten des Grundkörpers (und insbesondere einen Zentralbereich und/oder einen Anspritzpunkt) insbesondere tangentenstetig und bevorzugt krümmungsstetig angebunden ist. Bei der Freiformfläche handelt es sich insbesondere um eine Fläche, deren Krümmungsverlauf in eine (jede) Richtung durch Polynome n-ten Grades beschrieben werden kann.

Bevorzugt ist die Fußflankenfläche als eine Freiformfläche und insbesondere um einen Ausschnitt einer Freiformfläche ausgebildet, welche an die Flächenkanten einer imaginären (bzw. hypothetischen; zur Konstruktion verwendeten) rotationssymmetrisch ausgebildeten Zugbandfläche (bzw. Nutgrund) insbesondere tangentenstetig und bevorzugt krümmungsstetig angebunden ist. Dies bietet den Vorteil, dass die geometrische Form des Fußbereichs des Behältnisbodens aus dem Stand-der-Technik beibehalten werden kann.

Die vorliegende Erfindung ist weiterhin gerichtet auf eine Blasformeinrichtung zur Herstellung von Kunststoffbehältnissen mit einer Innenwandung, gegen welche ein Kunststoffbehältnis im Rahmen eines Blasformvorgangs expandierbar ist.

Erfindungsgemäß weist die Innenwandung eine Kontur auf, welche geeignet und bestimmt ist, ein Kunststoffbehältnis zu erzeugen, wobei das Kunststoffbehältnis mit allen obig im Zusammenhang mit dem Kunststoffbehältnis beschriebenen Merkmalen einzig oder in Kombination miteinander ausgestaltet sein kann.

Insbesondere weist dabei die Blasformeinrichtung ein Bodenteil auf, welches geeignet und bestimmt ist, einen Bodenbereich der oben beschriebenen Art zu erzeugen.

Die vorliegende Erfindung ist weiterhin gerichtet auf ein Verfahren zum Umformen eines Kunststoffbehältnisses aus einem Kunststoffvorformling in einer Blasformeinrichtung, bei der es sich insbesondere um die obig beschriebene Blasformeinrichtung (entsprechend einer offenbarten Ausführungsform) handelt, umfassend die Schritte:
- Vorblasen durch Beaufschlagen des Kunststoffvorformlings mit einem ersten Druck
- Zwischenblasen des Kunststoffvorformlings mit einem zweiten Druck, der höher als der erste Druck ist
- Fertigblasen des Kunststoffvorformlings mit einem dritten Druck, der höher ist als der zweite Druck, wobei dieser dritte Druck erfindungsgemäß zwischen 13 bar und 24 bar liegt.

Die Verwendung des erfindungsgemäßen Bodenteils bietet den Vorteil, dass ein niedrigerer Fertigblasdruck zur Herstellung der finalen Form des Kunststoffbehältnisses ausreichend ist.

Bei einem weiteren bevorzugten Verfahren werden die Kunststoffbehältnisse nach dem Fertigblasen entlastet bzw. wird wiederum Luft aus den Behältnissen entlassen. Bevorzugt wird der Fertigblasdruck für einen vorgegebenen Zeitraum gehalten.

Bevorzugt wird das Druckniveau nach dem Fertigblasen zumindest zeitweise wieder auf einen Zwischenblasdruck abgesenkt. Vorteilhaft liegt der erste Druck bzw. der Vorblasdruck zwischen 2 bar und 15 bar, bevorzugt zwischen 4 bar und 12 bar und besonders bevorzugt zwischen 4 bar und 10 bar. Vorteilhaft liegt der zweite Druck, d. h. der Zwischenblasdruck zwischen 8 bar und 40 bar, bevorzugt zwischen 12 bar und 20 bar. Vorteilhaft liegt der dritte Druck zwischen 13 bar und 24 bar, bevorzugt zwischen 15 bar und 24 bar, bevorzugt zwischen 20 bar und 24 bar und besonders bevorzugt unter 22 bar.. Dies bietet den Vorteil, dass der Blasdruck gegenüber den Werten aus dem Stand der Technik wesentlich reduziert werden kann und damit eine wesentliche Energieeinsparung erzielt werden kann.

Bei einem weiteren bevorzugten Verfahren kann der zweite Druck bzw. der Zwischenblasdruck in einem Druckbereich variiert werden, der zwischen 3 bar und 20 bar, bevorzugt zwischen 5 bar und 15 bar liegt.

Weitere Vorteile und Ausführungsformen ergeben sich aus den beigefügten Zeichnungen: Darin zeigen:
- Fig. 1: eine schematische Darstellung eines Kunststoffbehältnisses;
- Fig. 2, 3 und 6: verschiedene Darstellungen eines Bodenbereichs eines Kunststoffbehältnisses gemäß einer Ausführungsform des Standes der Technik;
- Fig. 4, 5, 7 und 8: jeweils eine verschiedene Darstellung eines Ausschnitts des Bodenbereichs des Kunststoffbehältnisses gemäß der Ausführungsform des Standes der Technik (gemäß Fig. 2, 3 und 6);
- Fig. 9: ein Messergebnis der Materialverteilung an einem Behältnisboden des Kunststoffbehältnisses gemäß der Ausführungsform des Standes der Technik;
- Fig. 10 und 11: jeweils eine Darstellung aus unterschiedlicher Perspektive eines Bodenbereichs eines erfindungsgemäßen Kunststoffbehältnisses gemäß einer Ausführungsform;
- Fig. 12, 13, 21, 22 und 23: jeweils einen Vergleich des Zugbandes bzw. Nutgrundes des Kunststoffbehältnisses gemäß der Ausführungsform des Standes der Technik mit einem Zugband bzw. Nutgrund gemäß der Ausführungsform eines erfindungsgemäßen Kunststoffbehältnisses;
- Fig. 16, 17, 27 und 28: jeweils einen Bodenbereich gemäß der Ausführungsform eines erfindungsgemäßen Kunststoffbehältnisses mit einem Zugband bzw. Nutgrund des Kunststoffbehältnisses gemäß der Ausführungsform des Standes der Technik;

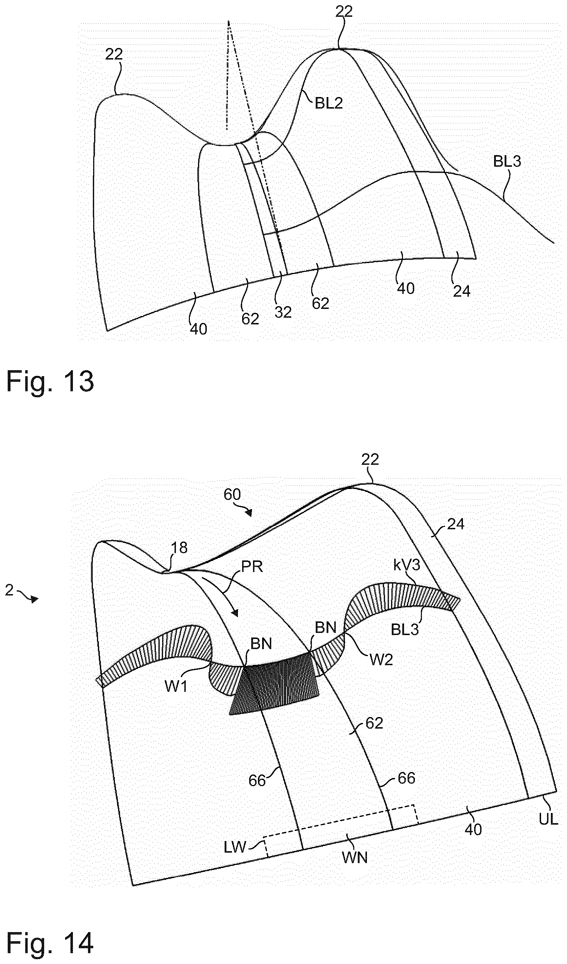

- Fig. 14: einen Krümmungsverlauf einer Bodenlinie, die auf dem Bodenbereich gemäß der Ausführungsform eines erfindungsgemäßen Kunststoffbehältnisses gebildet ist;

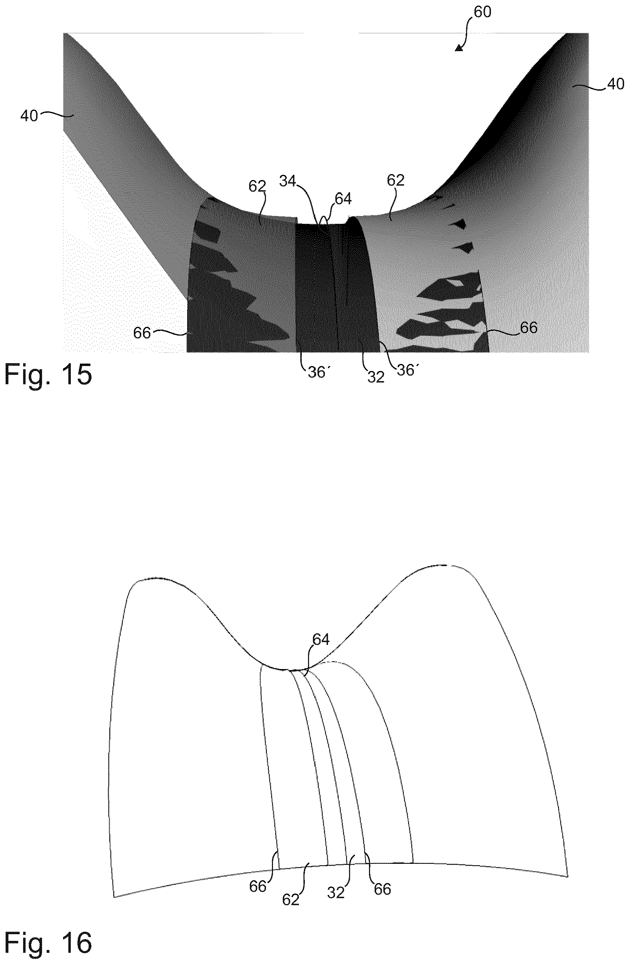

- Fig. 15, 25 und 26: jeweils eine weitere Gegenüberstellung des Zugbandes bzw. Nutgrundes des Kunststoffbehältnisses gemäß der Ausführungsform des Standes der Technik und des Zugbands bzw. Nutgrunds gemäß der Ausführungsform eines erfindungsgemäßen Kunststoffbehältnisses;

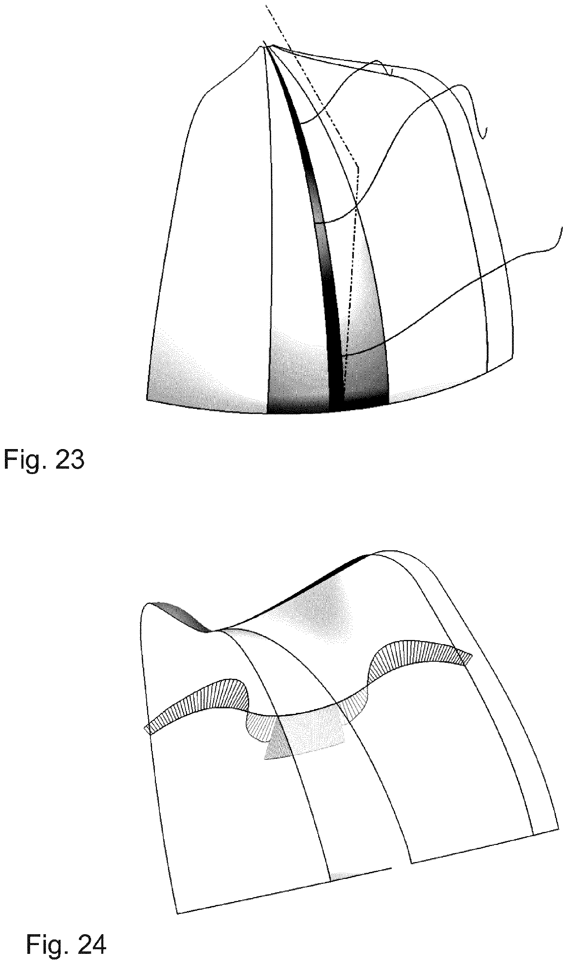

- Fig. 24: den Bodenausschnitt aus Fig. 14 mit Oberflächenschattierung;

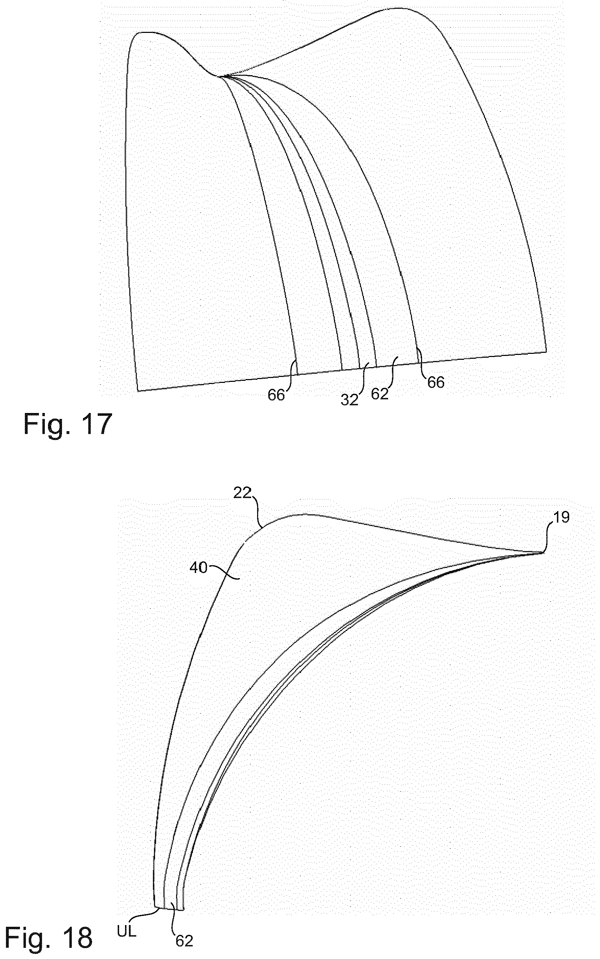

- Fig. 18: einen Ausschnitt eines Bodenbereichs einer bevorzugten erfindungsgemäßen Ausführungsform;

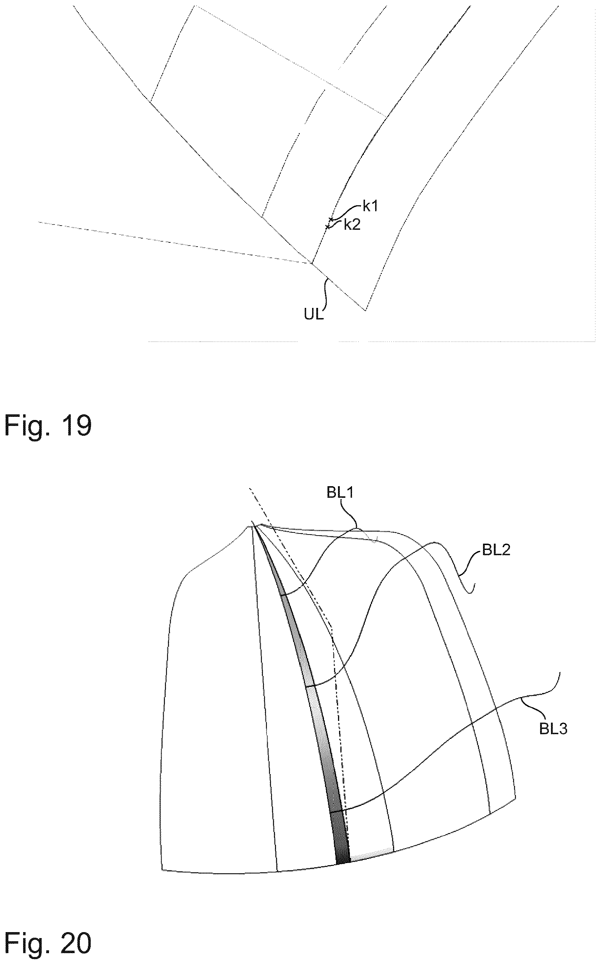

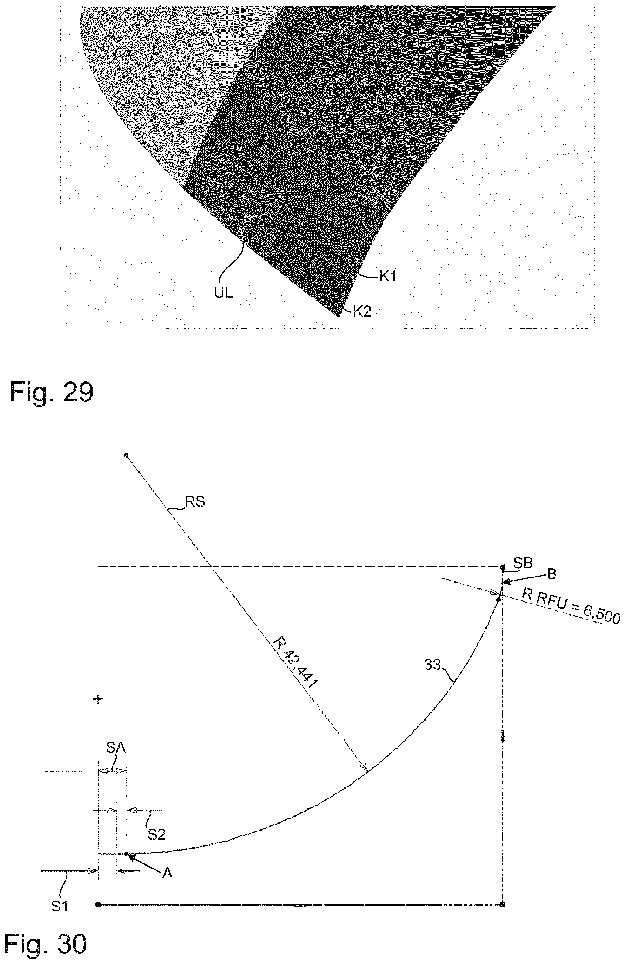

- Fig. 19 und 29: vergrößerte Darstellung eines Ausschnitts eines Bodenbereichs einer bevorzugten erfindungsgemäßen Ausführungsform;
- Fig. 20: eine Gegenüberstellung einer Konturlinie KL2 eines Nutbereichs;
- Fig. 30: eine bevorzugte Ausführungsform des Zugbands bzw. Nutgrunds eines erfindungsgemäßen Kunststoffbehältnisses; und

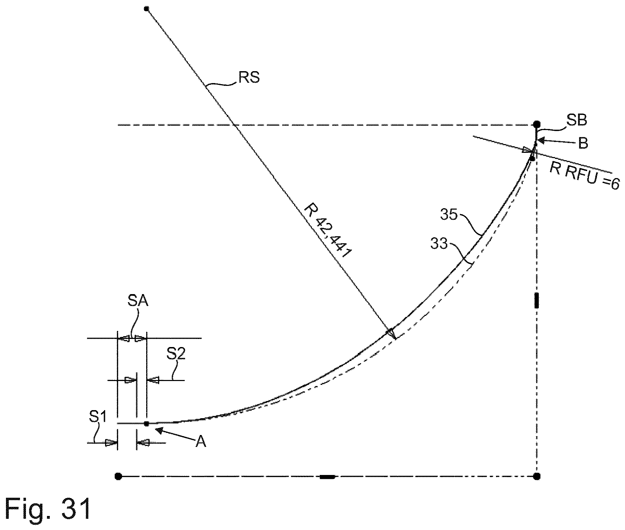

- Fig. 31: eine weiter bevorzugte Ausführungsform des Zugbands bzw. Nutgrunds eines erfindungsgemäßen Kunststoffbehältnisses.

Figur 1 zeigt eine schematische Darstellung eines Kunststoffbehältnisses 1. Dieses Kunststoffbehältnis weist dabei einen Mündungsbereich 6 mit Behältnismündung 8 sowie einen sich an den Mündungsbereich 6 anschließenden Grundkörper 4 auf. Der Grundkörper 4 dient dabei zur Aufnahme des wesentlichen Füllvolumens. Der Grundkörper kann in seiner Gestalt auch anders ausgebildet sein als in Figur 1 gezeigt und kann beispielsweise Wellen oder Muster aufweisen. Der Mündungsbereich 6 kann dabei ein Außengewinde des Kunststoffbehältnisses 1 und einen an der Behältnismündung 8 befindlichen Tragring aufweisen.

Auch das erfindungsgemäße Behältnis weist bevorzugt ein Außengewinde sowie einen Tragring auf.

Das Bezugszeichen L kennzeichnet eine Längsrichtung des Kunststoffbehältnisses 1. Wie dargestellt, handelt es sich hier bei der Längsrichtung L und eine Richtung entlang der Mittelachse N des Behältnisses. Außerdem ist in Figur 1 eine Umfangsrichtung U gezeigt, bei der es sich um eine Drehrichtung um die Mittelachse bzw. die Längsrichtung L als Drehachse handelt.

An den Grundkörper 4 schließt sich ein Bodenbereich 2 des Kunststoffbehältnisses an, wobei der Grundkörper 4 über einen gekrümmten Abschnitt oder aber über einen nicht gekrümmten Abschnitt in den Bodenbereich 2 übergehen kann.

Das Bezugszeichen 22 kennzeichnet einen (hier nicht gezeigten) Standfuß des Behältnisses. Der Bodenbereich 2 kann mehrere Standfüße 22 aufweisen, mit denen er aufrecht auf einer gerade Oberfläche stehen kann. Das Bezugszeichen R bezieht sich auf eine radiale Richtung bezogen auf die Mittelachse M bzw. auf die Längsrichtung L des Kunststoffbehältnisses. Die radiale Richtung R steht dabei senkrecht auf der Mittelachse N und die Längsrichtung L und läuft entweder auf diese hinzu oder von dieser nach außen hin weg. Das Bezugszeichen 50 kennzeichnet eine Seitenwandung des Grundkörpers 4. Diese Seitenwandung 50 verläuft in Umfangsrichtung U des Behältnisses vollumfänglich.

Die beiden Figuren 2 und 3 zeigen jeweils eine Darstellung des Bodenbereichs 2 in verschiedener perspektivischer Ansicht. Dabei handelt es sich um einen aus dem Stand der Technik bekannten Bodenabschnitt. Zu sehen sind fünf Standfüße 22, auf denen das Behältnis stehen kann. Das Bezugszeichen 24 kennzeichnet jeweils einen Bereich des Bodenbereichs 2, der sich von dem Bodenmittelpunkt von der Mittelachse M radial nach außen erstreckt und jeweils einen (genau einen) Standfuß 22 einschließt. Bevorzugt erstreckt sich dabei der Standbereich 24 jeweils in Umfangsrichtung U gesehen nicht über den Standfuß 22 hinaus. Bevorzugt handelt es sich bei dem Standbereich 24 um einen Bereich des Bodenbereichs 2, der durch ein vorgegebenes Winkelsegment bezogen auf eine Drehung in Umfangsrichtung U um die Mittelachse M als Drehachse definiert ist.

Die Standbereiche 24 laufen dabei in radiale Richtung hin gesehen in Richtung der Mittelachse M zusammen und treffen sich in dem Anspritzpunkt 18 des Behältnisses. In einer auf einer Ebene stehenden Ausrichtung des Behältnisses berührt der Anspritzpunkt 18 nicht diese Ebene. In Längsrichtung L gesehen befindet sich damit der Anspritzpunkt 18 oberhalb der Standfüße 22, also näher an dem Mündungsbereich als jeweils die Standfüße 22.

Zwischen jeweils zwei benachbarten Standfüßen ist eine Nut 30 ausgebildet. Dabei kann unter einer Nut ein geometrisches Gebilde verstanden werden, welches sich bezüglich der Umfangswandung, also etwa der Wandung des Bodenbereichs nach innen erstreckt.

Das Bezugszeichen 32 kennzeichnet den Nutgrund einer Nut. Der Nutgrund 32 ist dabei ein Bereich um die geometrische Mitte 34 einer Nut. Dabei handelt es sich um einen Bereich, der in der Figur 2 und Figur 3 gezeigten Ausführungsform eines Behältnisses gemäß dem Stand der Technik im Wesentlichen einem halbkugelförmigen Verlauf folgt. Einzelne gebildete in radiale Richtung an dem Anspritzpunkt 18 nach außen hin bzw. zur Seitenwandung hin bzw. zum Grundkörper hin verlaufende, gebildete Linie auf dem Bodenbereich 2 des Nutgrunds 32 ähneln dabei bzw. folgen einem kreislinienförmigen Verlauf. Eine derartige Wahl des geometrischen Kurvenverlaufs des Nutgrundes 32 hat sich dabei insbesondere hinsichtlich einer Kraftübertragung einer auf den Anspritzpunkt entgegen der Längsrichtung wirkenden Kraft auf eine Seitenwandung des Grundkörpers 4 als vorteilhaft erwiesen.

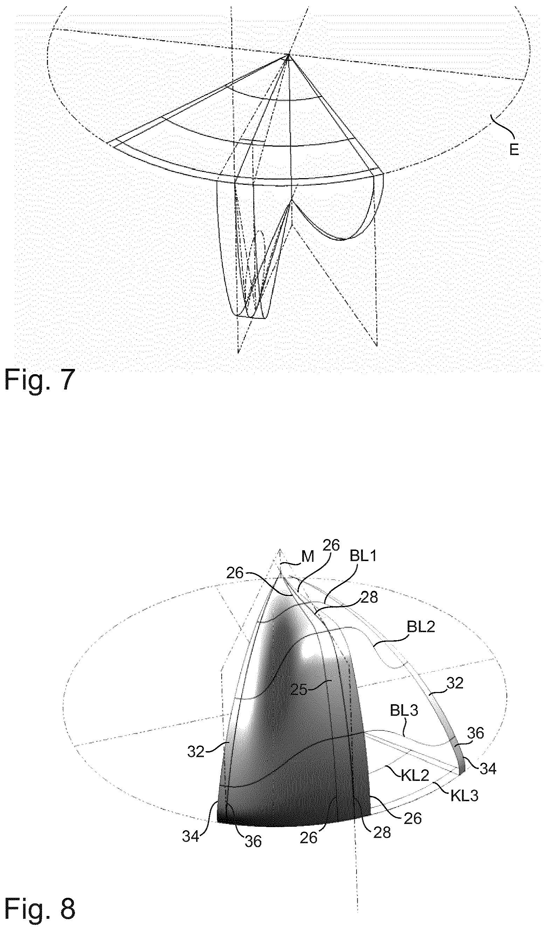

Die beiden Figuren 4 und 8 zeigen eine Liniendarstellung (Figur 4) bzw. illustrieren (Figur 8) einen Ausschnitt des Bodenbereichs zwei, der einem Winkelsegment an der geometrischen Mitte 34 einer ersten Nut 32 zur geometrischen Mitte 34 einer benachbarten zweiten Nut 32 entspricht. Von jeder dargestellten Nut 32 ist damit nur eine Hälfte abgebildet. Neben der geometrischen Mitte 32 ist als weitere Linie 36 eine Begrenzungslinie eingezeichnet, die den Nutgrund 32 gegenüber einem seitlich daran angeordneten Bereich des Bodenbereichs 2 der Nut 30 begrenzt. Der Nutgrund 32 eines Bodenbereichs 2 aus dem Stand der Technik ist dabei beispielsweise derart konstruiert, dass etwa die Begrenzungslinie 36 um die Mittelachse M in Umfangsrichtung (oder entgegen der Umfangsrichtung) um einen Winkel β1 + β2 rotiert wird. Dabei sind die beiden Winkel β1 und β2 gleich groß.

In ähnlicher Weise wird vorteilhaft ein Standbereich 24 eines Bodenbereichs 2 eines Behältnisses gemäß dem Stand der Technik und insbesondere auch gemäß einem Bodenbereich 2 eines erfindungsgemäßen Kunststoffbehältnisses 1 konstruiert. Hierzu wird beispielsweise ein vorgegebener Linienverlauf 26 um einen Winkel α in oder entgegen der Umfangsrichtung U um die Mittelachse M gedreht.
Die beiden Figuren 4 und 8 zeigen daneben auf der Außenoberfläche des Behältnisbodens verlaufende Bodenlinien BL1, BL2 und BL3, die jeweils derart gebildet sind, dass eine Projektion dieser Bodenlinien jeweils entlang der Längsrichtung auf eine Ebene senkrecht zur Mittelachse M einer Kreislinie folgt. Der jeweils einer Projektion der Bodenlinien BL1 bis BL3 entsprechende Kurvenverlauf KL1 bis KL3 in der Ebene E folgt daher, wie in Figur 4 ersichtlich, einem kreisförmigen Verlauf. Erkennbar ist aus den Figuren 4 und 8, dass die Bodenlinien BL1, BL2 und BL3 im Bereich des Standbereichs 24 jeweils keine Krümmung aufweisen (bei Betrachtung in der radialen Richtung). Anders ausgedrückt, verlaufen die Bodenlinien BL1, BL2 und BL3 innerhalb des Standbereichs 24, hier als Kreislinie in einer Ebene, welche (beispielsweise) senkrecht auf der Längsachse bzw. der Mittelachse steht.

In ähnlicher Weise sind die Bodenlinien BL1, BL2 und BL3 in dem Bereich des Nutgrunds 32 jeweils ungekrümmt (bzw. weisen sogar einen geradlinigen Verlauf auf) oder aber nur geringfügig gekrümmt. Die Bodenlinien BL1, BL2 und BL3 verlaufen hier damit ebenfalls in den jeweiligen Standbereichen 24 als Kreislinie in einer Ebene, die senkrecht auf der Mittelachse bzw. einer Längsrichtung L steht.

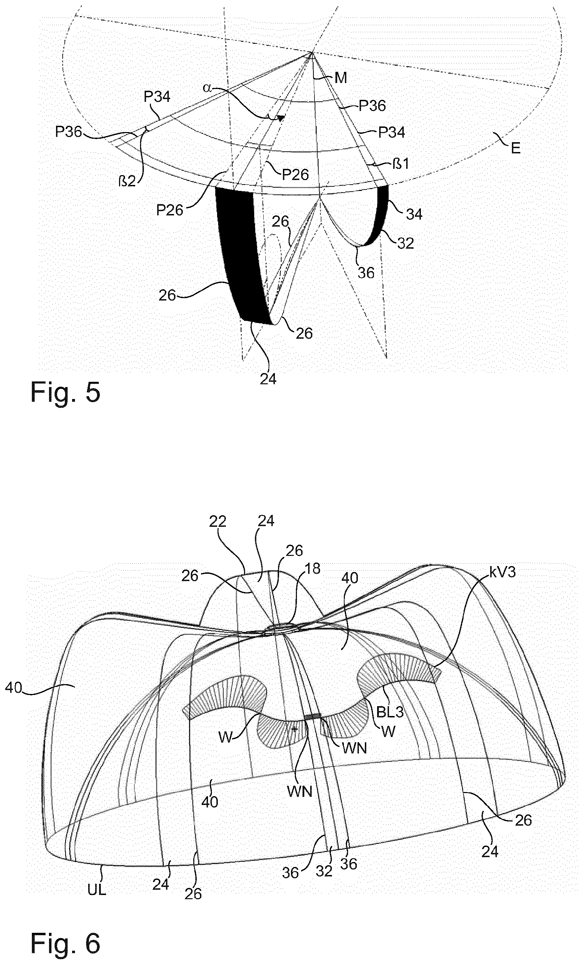

Die beiden Figuren 5 und 7 illustrieren nochmals eine Konstruktion der Standbereiche 24 und des Nutgrunds 32 eines Behältnisses gemäß dem Stand der Technik. Dabei zeigen die beiden Figuren 5 und 7 jeweils eine Darstellung von schräg oben auf zwei Ausschnitte des Behältnisbodens. Dargestellt sind dabei lediglich ein Standbereich 24 sowie eine Hälfte eines Nutgrunds 32. Der Nutgrund 32 ist dabei lediglich bis zu seiner geometrischen Mitte 34 abgebildet. Eingezeichnet ist ebenfalls zur Illustration der Konstruktion eine hypothetische bzw. gedachte Ebene E, welche senkrecht auf der Mittelachse M steht. Die hypothetische bzw. gedachte Ebene E, welche senkrecht auf der Mittelachse M steht, wird dabei in den Figuren 4, 5, 7 und 8 durch eine Ellipse veranschaulicht. Bei den darin gezeigten Ebenen E handelt es sich um diejenige senkrecht auf der Mittelachse M stehende Ebene, welche den Bodenbereich 2 von dem Grundkörper 4 abgrenzt.

Dargestellt in den beiden Figuren 5 und 7 sind jeweils Projektionen der Begrenzungslinien 26 auf die Ebene E, welche zu den beiden geradlinig verlaufenden Linien P26 führt, die jeweils in radiale Richtung zur Mittelachse M hin verlaufen. Ebenso ergeben hier auch die Projektionen der Begrenzungslinie 36 des Nutgrunds 32 sowie die geometrische Mitte 34 des Nutgrunds 32 in ihrer Projektion auf die Ebene E einen geradlinigen, in radiale Richtung auf die Mittelachse M hinzulaufende geradlinige Linie. Diese beiden projizierten Linien sind durch die Bezugszeichen P36 und P34 gekennzeichnet. Erkennbar ist, dass die beiden Linien P36 und P34 den Winkel β1 einschließen. Ein vollständiger Nutgrund entspricht einem Winkelsegment, welches sich über einen zweifachen Winkel β erstreckt. Die beiden projizierten Linien P26 schließen einen Winkel α ein. Damit wird dargestellt, dass der Standbereich 24 einem Behältnisbodenausschnitt entspricht, welches einem Winkelsegment, das sich über den Winkel β erstreckt, entspricht. Dabei werden die Winkelsegmente durch Rotationen um einen bestimmten Winkel in Bezug auf die Mittelachse M bzw. die Längsrichtung L in Umfangsrichtung erhalten.

Bei dem in den Figuren 2 - 8 dargestellten Stand-der-Technik-Behältnisboden 2 fungiert der Nutgrund 32 (jeweils) als Zugband, welches etwa Belastungen insbesondere auch in der Richtung dieses Zugbands abfängt.

Wie etwa in Fig. 5 dargestellt, ist hier bei dem Behältnisboden 2 aus dem Stand der Technik das Zugband ein Segment (des Behältnisbodens), welches rotiert wird um einen Winkel X.

Figur 6 stellt eine weitere Darstellung eines Behältnisbodens 2 des Standes der Technik dar. Erkennbar sind wiederum die fünf Standfüße sowie die jeweils zugehörigen Standbereiche 24, die durch die Linien 26 begrenzt sind. Die Begrenzungslinien 26 verlaufen dabei vom Anspritzpunkt 18 in einem Mittelpunkt des Behältnisbodens in radiale Richtung nach außen zu einer Seitenwandung des Grundkörpers hin. Eingezeichnet ist wiederum eine Bodenlinie BL3 ausgehend von einer Begrenzungslinie 26 eines Standbereichs 24 über einen Nutgrund 32 hinweg bis hin zu einer Begrenzungslinie 26 eines benachbarten Standbereichs 24.

Um diese Bodenlinie BL3 ist mit KV3 ein Krümmungsverlauf der Oberflächenwandung entlang der Bodenlinie BL3 eingezeichnet. Man erkennt, dass die Bodenlinie BL3 von der Begrenzungslinie 26 ausgehend eine sich ändernde Krümmung aufweist und die Orientierung bzw. die Ausrichtung der Krümmung sich in dem an den Standbereich 24 anschließenden Bereich an den Wendepunkt W umkehrt und daraufhin die Krümmung zunächst zunimmt, ein Maximum erreicht und stetig wieder abnimmt bis zur Begrenzungslinie 36 des Nutgrunds 32.

Der Krümmungsverlauf der Bodenlinie BL3 ist hier durch den grauen Balken im Bereich des Nutgrunds 32 dargestellt. Jedenfalls aber weist hier die Bodenlinie BL3 im Nutgrund 32 keine variierende Krümmung auf.
Das Bezugszeichen 40 kennzeichnet eine Fußflankenfläche, welche (in Umfangsrichtung gesehen) zwischen einem Standbereich 24 und/oder einem Standfuß 22 einerseits und dem Nutgrund 32 bzw. dem Zugband 32 angeordnet ist. Wie in Fig. 6 gezeigt, weist eine Bodenlinie (etwa BL3) des Stand-der-Technik-Bodens einen konstanten Verlauf der Krümmung im Bereich des Zugbandes 32 auf.

In Figur 8 kennzeichnet das Bezugszeichen 25 die Fußgeometrie (des Standfußes bzw. des Standbereichs). Die beiden Bezugszeichen 32 kennzeichnen wiederum die beiden in der Figur 8 dargestellten Zugbänder des Stand-der-Technik-Bodens.

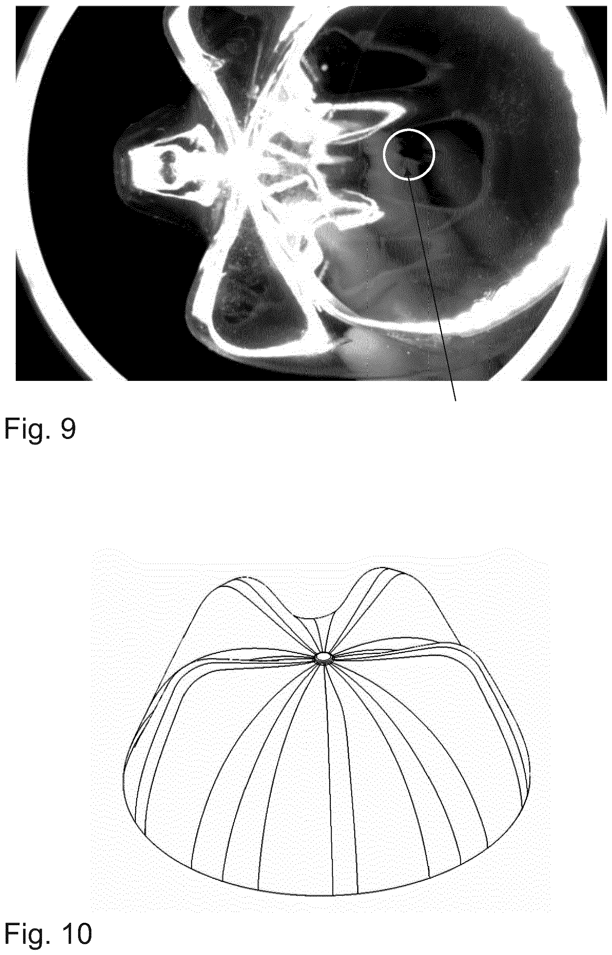

Figur 9 zeigt ein Messergebnis der Materialverteilung an einem Behältnisboden des Kunststoffbehältnisses gemäß der Ausführungsform des Standes der Technik. Der eingekreiste Bereich kennzeichnet einen Bereich des Zugbandes am Boden des Kunststoffbehältnisses, nachdem mittels eines Blasprozesses das PET-Material mit Blasdruck an eine (Blas-)Form geblasen wurde. Bei der Ausführungsform der vorgegebenen Blasform bzw. vorgegebene Form des zu erzielenden bzw. des dann entstandenen Kunststoffbehältnisses des Standes der Technik bleibt zu viel Material am Zugband des Bodens hängen und kühlt sehr schnell ab, so dass das Material nicht mehr ordentlich verstreckt werden kann.

Dabei entstehen unschöne Materialansammlungen am Zugband, welche in Figur 9 durch den eingezeichneten Kreis gekennzeichnet sind. Diese (unschönen) Materialansammlungen verringern zum einen die Optik des (fertig-geblasenen) Kunststoffbehältnisses, verringern allerdings zum anderen auch die Bodenperformance in Form von Wandstärke, Bursttest, Thermotest und Stress-Crack-Ergebnis, etwa bei 0,2 l bis 5 l (Füll-)Volumina.

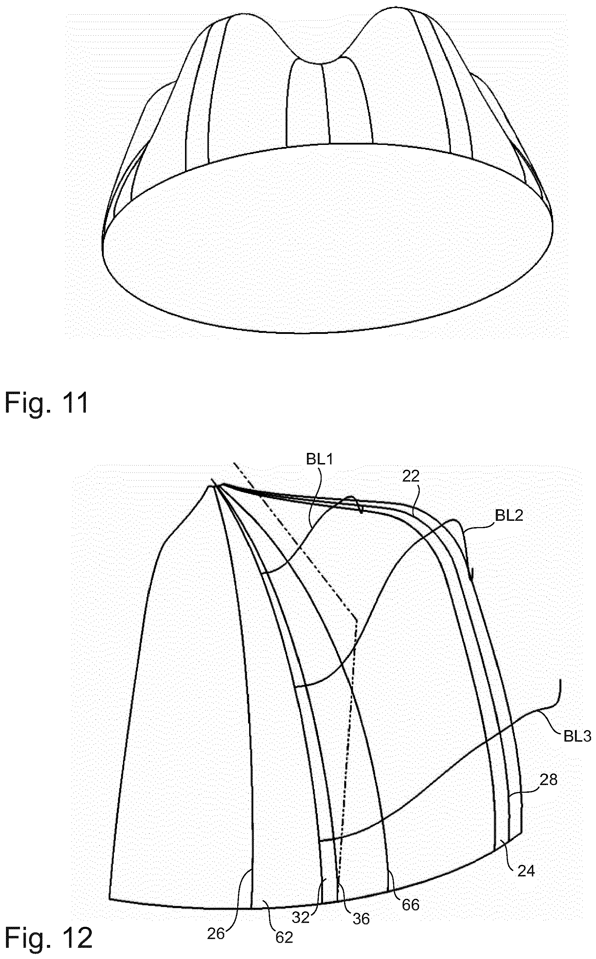

Die beiden Figuren 10 und 11 zeigen jeweils (unterschiedliche) Ansichten eines Bodenbereichs 2 eines erfindungsgemäßen Kunststoffbehältnisses 1 gemäß einer Ausführungsform. Im Vergleich zum Bodenbereich 2 des Stand-der-Technik-Bodens (etwa dargestellt in den Figuren 2 - 8) weist dieser eine neue, verbesserte Zugbandgeometrie auf.

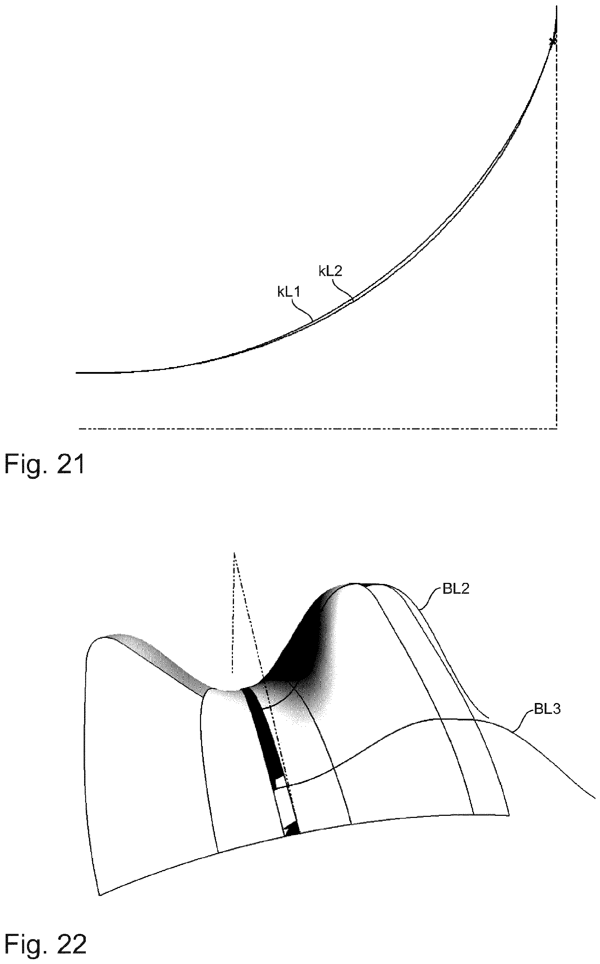

Die beiden Figuren 12 und 13, sowie die Figuren 21 (entspricht der Strichliniendarstellung in Fig. 12) und 22 (entspricht der Strichliniendarstellung in Fig. 13) und auch Figur 23, zeigen jeweils verschiedene, perspektivische Ansichten eines erfindungsgemäßen Bodenbereichs 2 mit im Vergleich zu dem in den Figuren 2-8 gewählten Nutgrund 32 bzw. Zugband 32 des Stand-der-Technik-Bodens verändertem Zugband 62 bzw. Nutgrund 62. Dabei ist in den beiden Figuren jeweils auch die Position des Zugbands 32 des Stand-der-Technik-Bodens veranschaulicht und durch die Begrenzungslinien 36 kenntlich gemacht. Das Bezugszeichen 62 kennzeichnet dabei die Zugbandgeometrie des neuen verbesserten Zugbands. Das Bezugszeichen 32 kennzeichnet die Zugbandgeometrie des Standes der Technik.

Beim neuen Zugband 62 wurde ein größeres Segment (von 5° bis 15°) zur Konstruktion verwendet als beim Stand der Technik, um einen harmonischeren Übergang vom Zugband in die Fußflanken(-fläche 40) hinzubekommen, so dass das Material besser in die Fußflanken gleiten und in radialer Richtung vom Zentrum aus verstreckt werden kann.

Die Zugbandgeometrie 62 weist hier einen mindestens tangentialen und/oder krümmungsstetigen Übergang in die Fußflanken(-fläche 40) auf.

Die Figuren 12 und 13 zeigen ebenfalls auf dem Bodenbereich gebildete Bodenlinien BL1-BL3, welche in der Projektion in Längsrichtung L auf eine Ebene E, die senkrecht auf die Längsrichtung L und die Mittelachse M steht, einem kreislinienförmigen Verlauf folgen. Jede dieser Bodenlinien weist einen sinusartigen Verlauf auf. Je nach Lage der einzelnen Bodenlinien in Bezug auf die radiale Richtung R weisen diese unterschiedliche Amplituden auf, wobei die größten Amplituden diejenigen Bodenlinien BL2 in der Nähe eines Standfußes 22 aufweisen.

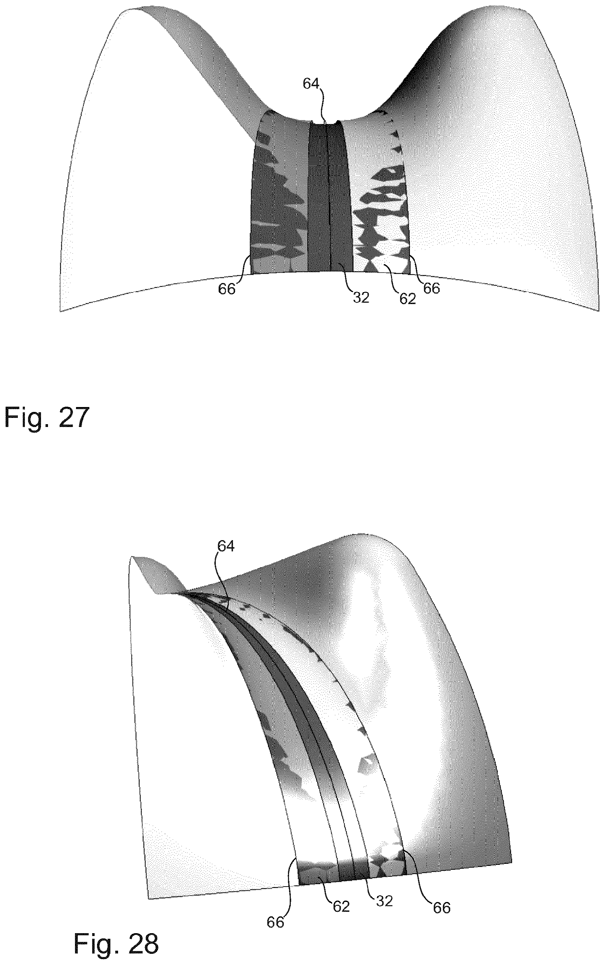

In ähnlicher Weise zeigen auch die Figuren 16 und 17 sowie die Figur 27 (entspricht der Strichliniendarstellung in Fig. 16) und Figur 28 (entspricht der Strichliniendarstellung in Fig. 17) eine Gegenüberstellung eines Nutgrundes 62 gemäß einer bevorzugten erfindungsgemäßen Ausführungsform mit einem Nutgrund 32, der entsprechend eines Stand-der-Technik-Bodenbereichs konstruiert ist (etwa demjenigen aus der DE 10 2013 110 139 A1) aus einer nochmals in anderer Weise gewählten Perspektive.

Neben den jeweiligen Begrenzungslinien 66 des Nutgrundes 62 ist auch die Lage der geometrischen Mitte 64 dieses Nutgrundes 62 ersichtlich, während der die geometrische Mitte 64 umgebende Bereich der Nutgrund 62 nicht dargestellt bzw. ausgeschnitten wurde. Hierdurch ist es möglich, in derselben Darstellung ebenfalls die geometrische Lage des Stand-der-Technik-Nutgrunds 32 darzustellen, welcher sich auf der dem Behältnisinneren zugewandten Seite des Bodenbereichs gemäß der in den Figuren 16, 17, 27 und 28 gezeigten bevorzugten erfindungsgemäßen Ausführungsformen befindet.

Insbesondere ist die geometrische Mitte 64 von dem Stand-der-Technik-Nutgrund bevorzugt im Wesentlichen entlang dessen gesamter Länge beabstandet.

Figur 14 zeigt einen Ausschnitt eines erfindungsgemäßen Bodenbereichs im Bereich einer Nut 60. Zu sehen sind der Nutgrund 62 sowie eine benachbart angeordneter Standfuß 22 und Standbereich 24. Der Behältnisboden geht ausgehend von dem Standfuß 22 und einem Standbereich 24 über eine Fußflankenfläche 40, insbesondere zu beiden Seiten hin in einen Nutgrund 62 über.

Wiederum ist ersichtlich, dass die Fußflankenflächen 40 einen Übergang zum Zugband 62 aufweisen, der mindestens tangential oder krümmungsstetig ist. Des Weiteren weist hier das (neue) Zugband 62 einen gekrümmten Verlauf (einer Bodenlinie, etwa der eingezeichneten Bodenlinie BL3) im Bereich des Zugbandes auf.

Durch die neue Zugbandgeometrie 62 ist es möglich, die Materialverteilung im Zugband 62 besser zu steuern. Da das PET-Material mit dem gekrümmten Verlauf besser abgleiten kann, werden die Materialansammlungen vom alten Zugband 32 (des Stand-der-Technik-Bodens) eliminiert. Hierdurch werden die positiven Auswirkungen erhalten, dass das Material noch besser verteilt werden kann, somit in die Flanken des Fußes und höher im Zugband verstreckt werden kann.

Dies hat positive Auswirkungen auf die Wandstärke im Boden, den Thermotest, den Bursttest und den Stress Crack. Dies macht sich vor allem bei den 2,0 l bis 3,5 l Volumina bemerkbar, wird aber auch den gleichen Effekt bei den kleineren Volumina haben. Bevorzugt kann daher der Fertigblasdruck reduziert werden.

Figur 14 zeigt darüber hinaus eine Bodenlinie BL3, welche von einer Begrenzung bzw. einem Rand des Standbereichs 24 über die Fußflankenfläche 40 hin zu dem Nutgrund 62 läuft, über diesen hinweg und von dort sich über eine weitere Fußflankenfläche 40 erstreckt bis hin zum seitlichen Rand bzw. zur seitlichen Begrenzung eines Standbereichs 24 des benachbart angeordneten Standfußes. Wie zu erkennen ist, verläuft die Bodenlinie BL3 dabei nicht über die Standfläche des Behältnisses, sondern in einem Bereich des Behältnisbodens, der zwischen dem Standbereich des Behältnisbodens und dem Grundkörper liegt. Die Bodenlinie BL3 verläuft daher in einem mittleren (in Längsrichtung gesehen) Bereich des Behältnisbodens. Der Verlauf einer Bodenlinie in diesem Bereich ist vergleichbar mit dem Verlauf einer Bodenlinie, welche sich über den Standbereich des Behältnisbodens bzw. dem Standfuß hinwegerstreckt, da der mittlere Bereich des Behältnisbodens allerdings bereits ein Übergangsbereich zum Grundkörper des Behältnisses darstellt, sind die Amplituden bzw. Auslenkungen der Bodenlinie BL3 in Längsrichtung nicht mehr so stark ausgeprägt, wie bei einer im Standbereich des Behältnisses verlaufenden Bodenlinie.

Dargestellt ist in Figur 14 zudem durch die Linie KV3 ein Krümmungsverlauf der Bodenlinie BL3. Die Linie KV3 zeigt dabei ein Maß für die Krümmung an einem jeweiligen Punkt der Bodenlinie BL3.

Bereits aus dem Verlauf der Bodenlinie BL3 selbst kann gesehen werden, dass wenn man dem Verlauf der Bodenlinie von der linken Figurenseite in Richtung der rechten Figurenseite folgt, zunächst ein erster Bereich der Nut und ein erster Bereich der Fußflankenfläche 40, welcher sich insbesondere seitlich an einen nicht gezeigten Standfuß und einen nicht gezeigten Standbereich anschließt, nach außen hin gewölbt ist. Bezogen auf die Figurenebene bzw. die Papierebene weist dieser Bereich eine Wölbung (bzw. Krümmung) nach außen, also aus der Papierebene bzw. der Figurenebene heraus auf. Wie der Krümmungsverlauf KV 3 zeigt, nimmt dabei die Krümmung zunächst streng monoton und in stetiger Weise bis zum Erreichen eines maximalen Krümmungswerts zu und fällt im Anschluss stetig und in streng monotoner Weise bis zum Erreichen eines Wertes 0 ab. An diesem Punkt der Bodenlinie weist diese einen Wendepunkt auf, an dem sich die Orientierung bzw. das Vorzeichen der Krümmung umkehrt. Das Bezugszeichen W1 kennzeichnet die Lage des Wendepunkts auf einer Bodenlinie, BL3 zwischen einem Standbereich und dem Nutgrund. Nach Erreichen dieses Wendepunkts W1 nimmt der Krümmungswert weiterhin stetig und insbesondere in streng monotoner Weise ab. Der Betrag des Krümmungswerts nimmt, wie aus Figur 14 ersichtlich dabei nach Erreichen des Wendepunkts W1 stetig zu. Möglich ist, dass kurz vor Erreichen des Nutgrundes der Betrag des Krümmungswerts erneut abnimmt.

Nach Erreichen des Wendepunkts W1 wölbt sich also, wie auch aus dem daran anschließenden Verlauf der Bodenlinie BL3 der Figur 14 ersichtlich ist, der Bereich der Fußflankenfläche 40 bzw. der Nut in die andere Richtung, also nach innen hin. Nach innen hin bedeutet hier in Richtung in das Behältnisinnere und bei der in Figur 14 gezeigten Wahl und Lage der Bodenlinie BL3 eine Wölbung in die Figurenebene bzw. in die Zeichenebene hinein.

Das Bezugszeichen 62 kennzeichnet wiederum den Bereich des Nutgrundes, der insbesondere die Funktionen eines Zugbandes innehat. Ersichtlich ist dabei, dass sich der Nutgrund vom Anspritzpunkt 18 bzw. von der geometrischen Mitte des Behältnisbodens bzw. des Bodenbereichs 2 eines Behältnisses 1 in radialer Richtung nach außen hin bzw. in radialer Richtung zu einer Seitenwandung des Grundkörpers hin vergrößert. Der Nutgrund 62 entspricht dabei einem vorgegebenen Winkelsegment des Bodenbereichs. Insbesondere schließen die beiden Begrenzungslinien, welche mit dem Bezugszeichen 66 gekennzeichnet sind, über deren gesamte Erstreckung in radialer Richtung hinweg, denselben vorgegebenen Umfangswinkel bezogen auf die Mittelachse und einer Drehung in Umfangsrichtung um die Mittelachse ein.

Aus Figur 14 werden nun zwei Aspekte deutlich, welche den Behältnisboden gemäß der vorliegenden Anmeldung von einem Behältnisboden gemäß dem Stand der Technik unterscheiden. Zum einen ist der Umfangswinkel des Nutgrunds wesentlich größer als derjenige Umfangswinkel α aus dem Stand der Technik. Damit erstreckt sich bevorzugt der Nutgrund über einen vergleichsweise größeren Öffnungswinkel bzw. Umfangswinkel. Zum anderen ist der Nutgrund entlang der Bodenlinie BL3 nach innen gewölbt. Diese Nach-Innen-Wölbung wird symbolisiert durch den Verlauf der Krümmungslinie KV3 unterhalb des Verlaufs der Bodenlinie BL3. Von einem Bereich aus dem Behältnisinneren, wie zum Beispiel von einem Mündungsbereich des Behältnisses aus oder aber von dem Bereich der Mittelachse M des Behältnisses aus, welche am nächsten an dem Bereich der Bodenlinie 3 angeordnet ist, konkav gekrümmt.

In der in Figur 14 dargestellten Ausführungsform eines Bodenbereichs weist dieser entlang der Bodenlinie BL3 im Bereich des Nutgrunds, also zwischen den beiden Punkten BN auf der Bodenlinie BL3 einen variierenden Krümmungsverlauf auf. Insbesondere ist der Krümmungswert in den Bereich des Nutgrunds 62 entlang der Bodenlinie BL3 gerade nicht konstant. Denkbar ist beispielsweise, dass der Betrag des Krümmungswerts zunächst stetig und insbesondere (streng) monoton abnimmt, bevorzugt bei der geometrischen Mitte des Nutgrunds, einen minimalen Betrag des Krümmungswerts erreicht und von dort aus stetig und (streng) monoton zunimmt. Bevorzugt nimmt der Betrag des Krümmungswerts an den beiden Rändern des Nutgrunds entlang einer Bodenlinie einen maximalen Wert an.

Wie aus Figur 14 ersichtlich, ist der Krümmungsverlauf KV3 entlang der Bodenlinie BL3 in dem Bereich, welcher sich an den Nutgrund zur rechten Figurenseite hin anschließt, demjenigen Kurvenverlauf KV3, welcher sich zur linken Seite hin dem Nutgrund 62 anschließt, korrespondierend. So verläuft die Bodenlinie BL3 zunächst durch einen Bereich des Behältnisbodens, welcher eine Wölbung nach innen aufweist. In einem Bereich der Nut und in einem Bereich der Fußflankenfläche 40 erreicht der Krümmungsverlauf KV3 einen Punkt W2, an dem die Krümmung 0 ist. W2 kennzeichnet damit einen weiteren Wendepunkt der Krümmung. Im Anschluss an dieses Wendepunkt W2 kehrt sich die Krümmung bzw. die Wölbung wiederum um, sodass zwischen diesem Wendepunkt W2 und dem Standbereich 24 des benachbart angeordneten Standfußes entlang der Bodenlinie BL3 nach außen gekrümmte bzw. nach außen gewölbte Wandungsbereiche vorliegen.

Betrachtet man den Krümmungsverlauf KV3 entlang der Bodenlinie BL3 an den beiden Punkten BN, an denen jeweils der Nutgrund in den übrigen Bereich der Nut bzw. in die Fußflankenflächen 40 übergeht, so ist aus Figur 14 ersichtlich, dass die Krümmung an diesen Punkten einen Sprung aufweist. Der Krümmungsverlauf KV3 einer Bodenlinie BL3 kann insbesondere an einem Bereich, in dem der Nutgrund 62 in einem seitlich benachbart angeordneten Bereich (etwa beispielsweise der restlichen Nut und/ oder einer Fußflankenfläche) übergeht, nicht stetig sein. Denkbar ist aber auch, anders als in der hier dargestellten Ausführungsform, dass der Krümmungsverlauf auch in den Punkten BN, in denen der Nutgrund entlang einer Bodenlinie BL3 in einer seitlich an den Nutgrund 62 angeordneten Bereich 40 (etwa einer Fußflankenfläche und/ oder einem übrigen Bereich der Nut) übergeht, krümmungsstetig ist.

Bevorzugt weist der Nutgrund 62 einen Bereich auf, in dem die Wandung des Behältnisbodens an jeder Stelle nach innen gewölbt ist, wobei dieser Bereich zwischen einem Anspritzpunkt 18 und/ oder einem diesen Anspritzpunkt 18 umgebenden Zentralbereich und/ oder einen den Zentralbereich und/ oder den Anspritzpunkt umgebenden Wendebereich einerseits und einen an den Grundkörper des Behältnisses benachbart angeordneten Wendebereich WN angeordnet ist. Bevorzugt nimmt dieser Bereich nahezu vollständig den Bereich des Nutgrunds 62 zwischen dem Anspritzpunkt oder einem diesen umgebenen Zentralbereich und dem benachbart angeordneten Grundkörper ein. Bevorzugt liegt in der Nähe des Grundkörpers ein Wendebereich WN vor, in dem die Wandung des Bodenbereichs nicht mehr nach innen gewölbt ist, sondern bevorzugt nach außen gewölbt ist.

Folgt man einer gedachten Linie entlang der Behältniswandung in radialer Richtung hin nach außen verlaufend, entsprechend dem Verlauf, der durch den Pfeil PR in Figur 14 angedeutet ist, und betrachtet man in jedem Punkt dieser gedachten Linie eine Bodenlinie, wie etwa symbolisch eingezeichnet die Bodenlinie BL3, so verläuft die Krümmung jeder einzelner dieser Bodenlinien über nahezu den gesamten Verlauf der gedachten Linie in ähnlicher Weise wie derjenige der Bodenlinie BL3 und insbesondere weist die jeweilige Krümmung über nahezu den gesamten Verlauf der gedachten Linie dieselbe Orientierung auf, wie diejenige der Bodenlinie BL3. Erst bei Erreichen des Wendebereichs WN ändert sich bevorzugt die Orientierung der Krümmung einer solchen Bodenlinie. Bevorzugt nimmt die radiale Ausdehnung dieses Wendebereichs, in dem sich die Orientierung der Krümmung einer Bodenlinie insbesondere in dem Bereich der geometrischen Mitte des Nutgrundes derart ändert, dass die Wandung des Behältnisbodens in diesem Bereich nicht mehr nach innen gewölbt ist, weniger als 20 %, bevorzugt weniger als 10 %, bevorzugt weniger als 5 % und besonders bevorzugt weniger als 2,5 % des Behältnisdurchmessers an der Umfangslinie UL und insbesondere dem Schnittpunkt mit der geometrischen Mitte des Nutgrunds ein. Die Umfangslinie UL beschreibt insbesondere eine Begrenzung und/ oder einen Übergang zwischen dem Bodenbereich eines Behältnisses und dem Grundkörper eines Behältnisses.

Der besseren Darstellbarkeit der dreidimensionalen Form zeigt Figur 24 den Bodenabschnitt aus Figur 14 mit entsprechenden Oberflächenschattierungen.

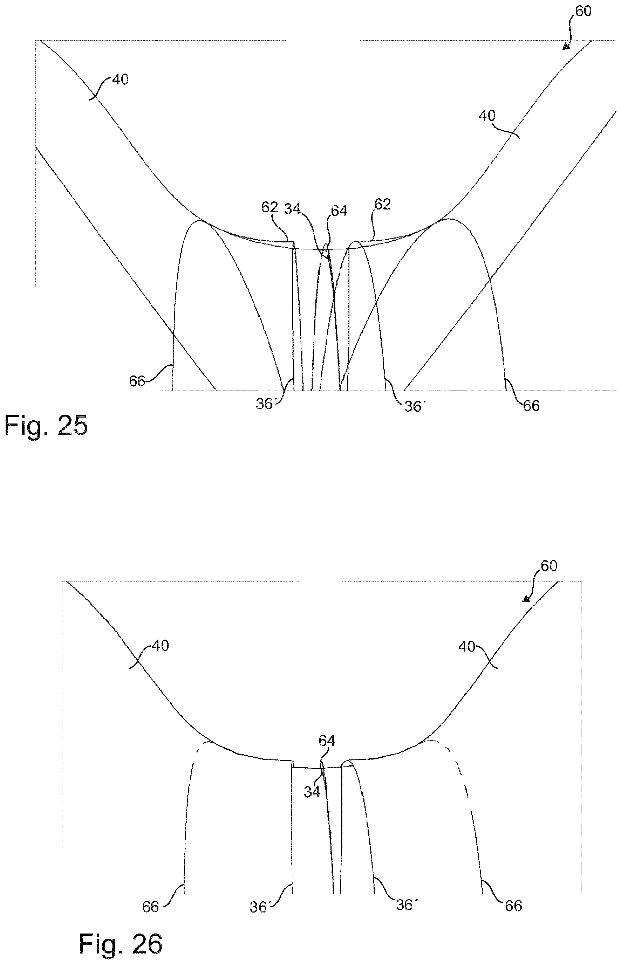

Figur 15 sowie die beiden Strichliniendarstellungen der Figuren 25 und 26 zeigen eine erneute Gegenüberstellung eines Abschnitts des Behältnisbodens aus dem Stand der Technik mit einem Abschnitt eines Behältnisbodens entsprechend einer bevorzugten Ausführungsform der vorliegenden Erfindung. Diese Figuren verdeutlichen in besonderer Weise die unterschiedliche Konstruktion des Zugbands bzw. des Nutgrunds des Behältnisbodens.

Dargestellt ist der Behältnisboden aus einer Blickrichtung entgegen einer nahezu radialen Richtung etwa von außen in Richtung der Mittelachse. Gezeigt sind die Bereiche zwischen zwei benachbarten Standfüßen, wobei die Standbereiche der Behältnisse selbst nicht mehr dargestellt sind. Die Nut 60 zwischen den beiden Standfüßen wird unter anderem gebildet und/ oder begrenzt von den beiden Fußflankenflächen 40.

Das Bezugszeichen 62 kennzeichnet dabei den Nutgrund gemäß einer bevorzugten Ausführungsform der vorliegenden Erfindung. Dabei ist dieser Nutgrund 62 nicht in seiner Gesamtheit dargestellt, sondern um den Bereich einer geometrischen Mitte des Nutgrunds entlang der beiden Linien 36' ausgeschnitten. Die gestrichelt eingezeichnete Linie 64 zeigt den Verlauf der geometrischen Mitte des Nutgrunds gemäß der bevorzugten Ausführungsform der vorliegenden Erfindung. Die beiden durch das Bezugszeichen 66 gekennzeichneten Linien zeigen den Übergang bzw. die Begrenzung des Nutgrunds zu dem seitlich benachbart angeordneten Bereich, etwa die Fußflankenflächen 40.

Durch den Ausschnitt aus dem Nutgrund 62 ist es möglich, einen gemäß dem Stand der Technik konstruierten Nutgrund 32, welcher sich im Vergleich zu dem Nutgrund 62 in radialer Richtung weiter an der Mittelachse des Behältnisses innenliegend befindet, darzustellen. Das Bezugszeichen 34 kennzeichnet die geometrische Mitte des Stand-der-Technik-Nutbereichs 32. Die geometrische Mitte 32 wird dabei insbesondere ebenso wie der Stand-der-Technik-Nutgrund 32 von einem Nutgrund 62 gemäß einer bevorzugten Ausführungsform der vorliegenden Erfindung über dessen gesamten Verlauf hin bzw. vollflächig eingeschlossen. Mit anderen Worten ist bevorzugt der Stand-der-Technik-Nutgrund sowie insbesondere dessen geometrische Mitte 34 im Inneren des Behältnisses, welches einen Bodenbereich gemäß einer Ausführungsform der vorliegenden Erfindung aufweist, angeordnet.

Die Figur 18 zeigt einen Ausschnitt eines Bodenbereichs einer bevorzugten erfindungsgemäßen Ausführungsform. Dargestellt ist ein Winkelsegment des Bodenbereichs zwischen einem Standfuß 22 und der geometrischen Mitte eines Nutgrunds 62. Zu erkennen ist, dass die Linienführung über den Standfuß 22 sowie die geometrische Mitte des Nutgrundes 62 in radialer Richtung hin jeweils nach innen zusammen laufen und sich in der geometrischen Mitte 19 des Behältnisses treffen. Der Standfuß 22 geht über die Fußflankenfläche, die wiederum mit dem Bezugszeichen 40 gekennzeichnet ist in den Nutgrund 62 über. Die in radialer Richtung, bezogen auf die geometrische Mitte 19, am weitesten außen liegende Begrenzungslinie des Bodenbereichs ist wiederum mit dem Bezugszeichen UL gekennzeichnet. Das Bezugszeichen KV kennzeichnet den Krümmungsverlauf einer Linie entlang der geometrischen Mitte des Nutgrundes 62.
Zu erkennen ist dabei, dass in einem Bereich, welcher nahe und/ oder benachbart an der Umfangslinie UL und damit nahe an dem Grundkörper des Behältnisses angeordnet ist, der Krümmungsverlauf KV einen Wendepunkt aufweist.

Dies ist besonders deutlich erkennbar in Figur 19 und 29 (Fig. 29 entspricht der Strichliniendarstellung in Figur 19, durch die darin eingezeichneten Kreuze K1 und K2). Die beiden Darstellungen in Figur 19 und 29 entsprechen vergrößerten Darstellungen eines Bodenbereichs in dem Schnittpunkt der geometrischen Mitte eines Nutgrunds und der Umfangslinie UL bzw. dem Randbereich des Bodenbereichs, welcher in Längsrichtung an den Grundkörper benachbart angeordnet ist.

Schließlich zeigt die Figur 20 eine Gegenüberstellung einer Konturlinie KL2 eines Nutbereichs gemäß einer bevorzugten erfindungsgemäßen Ausführungsform eines Nutbereichs eines Behältnisses mit einer Konturlinie KL1 eines Nutgrundes eines Behältnisses aus dem Stand der Technik. Das Bezugszeichen KR kennzeichnet dabei den Krümmungsverlauf der Konturlinie KL1.

Die beiden Konturlinien KL1 und KL2 können beispielsweise aus der Bildung eines Querschnitts des Behältnisbodens mit einer Ebene, welche sich in Längsrichtung sowie in eine radiale Richtung sowie durch den Nutgrund etwa durch dessen geometrische Mitte erstreckt, entstanden sein. Wie aus Figur 20 ersichtlich ist, nähert sich in dem verbesserten Zugband bzw. Nutgrund die Fläche dieses Zugbands in einer solchen Querschnittsdarstellung der Konturlinie bzw. dem Radius des Zugbands insbesondere in dessen geometrischer Mitte an. Durch den im Vergleich zum Stand der Technik vergrößerten Öffnungswinkel, welcher zur Konstruktion des Zugbands bzw. Nutgrunds gemäß der vorliegenden Anmeldung verwendet wird, wird aber der Spline für die Entstehung der neuen Zugbandfläche bzw. des neuen Nutgrundes definiert in der Fußflanke, wodurch in einem mittleren Bereich (siehe Figur 20) die Abweichung zustande kommt.

Figur 30 zeigt eine bevorzugte Ausführungsform des Zugbands bzw. Nutgrunds eines erfindungsgemäßen Kunststoffbehältnisses 1. Gemäß dieser bevorzugten Ausführungsform ist die Zugbandquerschnittkontur mit den zwei Radien R RFU und R 42,441 vom Zentrum mit dem Umfang der Flasche verbunden.

Diese Geometrie kann bei einem Innendruck bis zu 5,5 bar nicht ausreichend Kraft aufnehmen. Aus diesem Grund kann das Bodenzentrum um den Anspritzpunkt nicht mehr bei der fertiggeblasenen Falsche die gewünschte Bodenfreiheit halten, was dazu führt, dass die Optik und die Bodenperformance, in Form von Wandstärke, Bursttest, Thermotest und Stress Crack Ergebnis, bei derart hohen Innendrücken nicht mehr gehalten werden kann, wie die Anmelderin in aufwendigen Laborversuchen feststellte.

Das Bezugszeichen 33 kennzeichnet in Figur 30 eine Nutgrundquerschnittskontur bzw. eine Zugbandquerschnittskontur, welche beispielsweise bei einem Querschnitt entlang der Längsachse L des Behältnisses durch einen Bodenbereich (im Bereich eines Nutgrundes bzw. Zugbandes) des Behältnisses erhalten werden kann. Wie durch die beiden Radien RS (bzw. R 42,441) und R RFU=6,500 in Fig. 30 illustriert ist, weist die Nutgrundquerschnittskontur bzw. eine Zugbandquerschnittskontur zwei kreislinienförmige Abschnitte auf (mit verschiedenen Radien). Punkt A und Punkt B kennzeichnen Punkte der Nutgrundquerschnittskontur bzw. der Zugbandquerschnittskontur, bei der diese in einen geradlinigen Abschnitt übergeht und/oder ab dem ein geradliniger Verlauf folgt.

Figur 31 zeigt eine weiter bevorzugte Ausführungsform des Zugbands bzw. Nutgrunds eines erfindungsgemäßen Kunststoffbehältnisses 1, in der zur weiteren Verbesserung der Zugbandquerschnittskontur die beiden Radien aus Fig. 30 durch einen Spline ersetzt sind. Die Krümmung des Splines kann bevorzugt durch ein Polynom n-ten Grades beschrieben werden. Der Grad n bewegt sich bevorzugt zwischen Grad 2 und Grad 7. Der Übergang vom Zentrum des Bodens, in der Fig. 31 gekennzeichnet durch Punkt A, (zum Zugband) ist besonders bevorzugt krümmungsstetig, bevorzugt mindestens aber tangentenstetig. Der Übergang vom Spline (insbesondere vom Zugband, bevorzugt gebildet durch einen Spline) in den Umfang der Falsche, in der Fig. 31 gekennzeichnet durch Punkt B, ist bevorzugt krümmungsstetig, bevorzugt mindestens aber tangentenstetig. Dies bietet den Vorteil einer Verbesserung der Bodenfreiheit an der geblasenen Flasche.

Die Übergangssteuerung kann durch die Tangentenwerte des Splines in den Punkten A und/oder B gesteuert werden. Die Werte für den Betrag des Tangentenvektors (welcher insbesondere den Prozentsatz der Tangentialität im Start- und Endwert darstellt) können sich zwischen 0,1 und 2,5 bewegen. Die Werte können in den Punkten A und B gleich sein, sie können aber auch unterschiedlich sein.
Eine weitere Variante des Splines kann durch eine konische Übergangssteuerung beschrieben werden. Hier wird die Übergangssteuerung durch einen Wert Rho gesteuert. Dieser Wert kann zwischen 0,01 und 0,99 liegen. Insbesondere erzeugt ein kleiner Rho-Wert einen flachen Kegel, während ein großer Rho-Wert einen spitzen Kegel erzeugt.

In Fig. 31 ist neben der aus Fig. 30 bekannten möglichen Nutgrundquerschnittskontur 33 bzw. Zugbandquerschnittskontur 33 eine weiter bevorzugte Ausgestaltungsform einer Basiskontur eines Nutgrundes bzw. eines Zugbands (bzw. Nutgrundquerschnittskontur bzw. Zugbandquerschnittskontur 35) gezeigt, welche durch das Bezugszeichen 35 gekennzeichnet ist. Diese weist bevorzugt einen Bereich auf, welcher durch ein Spline n-ten Grades beschrieben werden kann. Dieser Spline schließt sich bevorzugt einem Grundkörperanschlussbereich SB an, welcher bevorzugt einen geradlinigen Abschnitt aufweist und/oder geradlinig ausgestaltet ist, und welcher sich an den Grundkörper des Behältnisses anschließt. Der Spline schließt sich bevorzugt an einen Mittelpunktübergangsabschnitt SA an, welcher sich an eine geometrische Mitte des Behältnisbodens oder an einen Zentralbereich des Behältnisbodens oder einem Anspritzpunkt des Behältnisses anschließt.

Bevorzugt weist der Grundkörperanschlussabschnitt einen kreislinienförmigen und/oder gekrümmten Abschnitt auf, welcher sich insbesondere an den Spline anschließt.

Bevorzugt weist der Mittelpunktsübergangsabschnitt SA einen geradlinigen Abschnitt S1 auf und/oder einen weiteren im Wesentlichen geradlinigen Abschnitt S2 auf, welcher ebenfalls geradlinig verläuft oder eine lediglich geringfügige Krümmung aufweist (insbesondere im Vergleich zu dem Spline in einem mittleren Bereich des Splines).

Bevorzugt kann der Spline der Basiskontur bzw. der Nutgrundquerschnittskontur 35 vollständig einer Kreislinie einbeschrieben werden. Mit anderen Worten liegt der Spline vollständig innerhalb eines Kreises, dessen Kreislinie durch einen Anfangs- und einen Endpunkt des Splines verläuft.

Bevorzugt nimmt der Spline den größten Teil der Bogenlänge der Basiskontur des Nutgrunds bzw. den größten Teil der Bogenlänge der Nutgrundquerschnittskontur 35 ein.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Kunststoffbehältnis
- 2: Bodenbereich
- 4: Grundkörper
- 6: Mündungsbereich
- 8: Behältnismündung
- 18: Anspritzpunkt
- 19: geometrische Mitte der Bodenwandung (bzw. Bodenbereich)
- 22: Standfuß
- 24: Standbereich/Standabschnitt
- 25: Fußgeometrie
- 26: Begrenzungslinie des Standbereichs 24
- 28: geometrische Mitte des Standbereichs 24
- 30: Nut
- 32: Nutgrund
- 33: Nutgrundquerschnittskontur/Zugbandquerschnittskontur, Basiskontur
- 34: geometrische Mitte
- 35: Nutgrundquerschnittskontur/Zugbandquerschnittskontur, Basiskontur
- 36: Begrenzungslinie des Nutgrunds 32
- 40: Fußflankenfläche
- 50: Seitenwandung
- 60: Nut
- 62: Nutgrund
- 64: geometrische Mitte
- 66: Begrenzungslinie des Nutgrunds 62
- A, B: Punkte eines Übergangs
- BL1, BL2, BL3: Bodenlinien
- BN: Begrenzung Nutgrund
- KL1, KL2, KL3: Kreislinien in Ebene E
- KV3: Krümmungsverlauf der Bodenlinie BL3
- KV, KR: Krümmungsverlauf
- K1, K2: Kreuz
- KL1, KL2: Konturlinie
- L: Längsrichtung
- LW: Linie
- M: Mittelachse
- P34, P36, P26: auf Ebene E projizierte Begrenzungslinien 34, 36 und 26
- PR: Pfeil
- R: radiale Richtung
- S1, S2, SA, SB: Abschnitte der Nutgrundquerschnittskontur
- U: Umfangsrichtung
- UL: Umfangslinie
- W, WN: Wendepunkt
- W1, W2: Wendepunkt
- WB: Wendebereich

## Patentansprüche

1. Kunststoffbehältnis (1), insbesondere für Getränke, mit einem Bodenbereich (2), einem sich in Längsrichtung (L) des Kunststoffbehältnisses (1) an diesen Bodenbereich (2) anschließenden Grundkörper (4) und einem sich in der Längsrichtung (L) an diesen Grundkörper (4) zumindest mittelbar anschließenden Mündungsbereich (6) mit einer Behältnismündung (8), wobei der Bodenbereich (2) wenigstens drei Standfüße (22) aufweist, wobei zwischen zwei insbesondere benachbarten dieser Standfüße (22) wenigstens eine Nut (30) mit einem sich in Umfangsrichtung (U) über einen Umfangswinkel erstreckenden Nutgrund (32) angeordnet ist, wobei das Behältnis einteilig ausgebildet ist,
**dadurch gekennzeichnet, dass**
die Wandung des Behältnisses (1) wenigstens abschnittsweise in dem Bereich des Nutgrundes (32) einer Nut (30) nach innen gewölbt ist.

2. Kunststoffbehältnis (1) nach Anspruch 1,
**dadurch gekennzeichnet, dass**
wenigstens ein Nutgrund (32) einen Umfangswinkel aufweist, der zwischen 2,5° und 20°, bevorzugt zwischen 5° und 15° liegt.

3. Kunststoffbehältnis (1) nach wenigstens einem der vorangegangenen Ansprüche,
**dadurch gekennzeichnet, dass**
sich die Krümmung einer entlang des Bodenbereichs (2) gebildeten Linie, welche sich ausgehend von einem Standfuß (22) oder einem einen Standfuß (22) umgebenden Standbereich (24) über wenigstens einen Nutgrund (32) hinweg erstreckt, in dem Nutgrund (32) um weniger als 30 %, bevorzugt um weniger als 25 %, bevorzugt um weniger als 20 % und besonders bevorzugt um weniger als 15% ändert.

4. Kunststoffbehältnis (1) nach wenigstens einem der vorangegangenen Ansprüche,
**dadurch gekennzeichnet, dass**
die Wandung des Behältnisses (1) wenigstens abschnittsweise in einem seitlich benachbarten Bereich einer geometrischen Mitte (34) des Nutgrundes (32) nach innen gewölbt ist.

5. Kunststoffbehältnis (1) nach wenigstens einem der vorangegangenen Ansprüche,
**dadurch gekennzeichnet, dass**
die Wandung des Behältnisses (1) wenigstens abschnittsweise entlang einer geometrischen Mitte (34) des Nutgrundes (32) nach innen gewölbt ist.

6. Kunststoffbehältnis (1) nach wenigstens einem der vorangegangenen Ansprüche,
**dadurch gekennzeichnet, dass**
sich eine Breite (BR) des Nutgrundes (32) in einer radialen Richtung des Behältnisses (1) nach außen vergrößert.

7. Kunststoffbehältnis (1) nach wenigstens einem der vorangegangenen Ansprüche,
**dadurch gekennzeichnet, dass**
ein zwischen einem Standfuß (22) und einem Nutgrund (32) angeordneter Bereich des Bodenabschnitts (2) tangentenstetig und/oder krümmungsstetig in den Nutgrund (32) übergeht.

8. Kunststoffbehältnis (1) nach wenigstens einem der vorangegangenen Ansprüche,
**dadurch gekennzeichnet, dass**
wenigstens eine in radiale Richtung, auf der Oberfläche verlaufende Linie, welche wenigstens abschnittsweise durch einen Nutgrund (32) verläuft, einen Wendebereich aufweist, in dem ein Oberflächenbereich des Bodenabschnitts (2) die Orientierung seiner Krümmung ändert und insbesondere von einem nach außen gekrümmten Bereich in einen nach innen gekrümmten Bereich überführt wird.

9. Kunststoffbehältnis (1) nach wenigstens einem der vorangegangenen Ansprüche,
**dadurch gekennzeichnet, dass**
eine Nutgrundquerschnittskontur 35 bei einem Querschnitt entlang der Längsrichtung L des Behältnisses wenigstens abschnittsweise und bevorzugt im Wesentlichen vollständig einem Spline n-ten Grades folgt.

10. Kunststoffbehältnis (1) nach wenigstens einem der vorangegangenen Ansprüche,
**dadurch gekennzeichnet, dass**
ein durch einen Spline beschreibbarer Abschnitt eines und bevorzugt jedes Nutgrundes (32) tangentenstetig und/oder krümmungsstetig in einen sich an den Spline anschließenden, bevorzugt geradlinigen, Abschnitt (SA, SB) des Bodenbereichs übergeht.

11. Blasformeinrichtung zur Herstellung von Kunststoffbehältnissen (1) mit einer Innenwandung, gegen welche ein Kunststoffbehältnis (1) im Rahmen eines Blasformvorgangs expandierbar ist,
**dadurch gekennzeichnet, dass**
die Innenwandung eine Kontur aufweist, welche geeignet und bestimmt ist, ein Kunststoffbehältnis (1) nach wenigstens einem der vorangegangenen Ansprüche zu erzeugen.

12. Verfahren zum Umformen eines Kunststoffbehältnisses (1) aus einem Kunststoffvorformling in einer Blasformeinrichtung insbesondere gemäß dem vorangegangenen Anspruch umfassend die Schritte:
- Vorblasen durch Beaufschlagen des Kunststoffvorformlings mit einem ersten Druck
- Zwischenblasen des Kunststoffvorformlings mit einem zweiten Druck, der höher als der erste Druck ist
- Fertigblasen des Kunststoffvorformlings mit einem dritten Druck, der höher ist als der zweite Druck, wobei dieser dritte Druck erfindungsgemäß zwischen 13 bar und 24 bar liegt.
